# EUROPEAN PATENT SPECIFICATION

(11) **EP 1 279 646 B1**
(45) Date of publication and mention of the grant of the patent: **13.12.2006**
(21) Application number: 02015543.8
(22) Date of filing: 11.07.2002
(51) Int. Cl.: C03B 37/014, C03B 37/018

(54) **Method and apparatus for producing a glass preform for optical fibres**
Verfahren und Vorrichtung zum Herstellen einer Vorform aus Glas für optische Fasern
Procédé et appareil pour la fabrication d'une préforme en verre pour fibre optiques

(30) Priority: 26.07.2001 JP 2001226321; 30.07.2001 JP 2001229022; 14.08.2001 JP 2001245903
(43) Date of publication of application: 29.01.2003
(73) Proprietor: Sumitomo Electric Industries, Ltd., Osaka (JP)
(72) Inventor: Ishihara, Tomohiro, Yokohama Works, Sakae-ku, Yokohama-shi, Kanagawa (JP)
(74) Representative: HOFFMANN EITLE

(56) References cited:
- EP-A- 0 482 348
- EP-A- 0 845 441
- PATENT ABSTRACTS OF JAPAN vol. 015, no. 202 (C-0834), 23 May 1991 (1991-05-23) & JP 03 054129 A (FUJIKURA LTD), 8 March 1991 (1991-03-08)
- PATENT ABSTRACTS OF JAPAN vol. 017, no. 102 (C-1031), 2 March 1993 (1993-03-02) & JP 04 292434 A (FUJIKURA LTD), 16 October 1992 (1992-10-16)
- PATENT ABSTRACTS OF JAPAN vol. 017, no. 046 (C-1021), 28 January 1993 (1993-01-28) & JP 04 260633 A (FUJIKURA LTD), 16 September 1992 (1992-09-16)

## Description

### BACKGROUND OF THE INVENTION

The present invention relates to production of a glass preform. Specifically, the present invention relates to a method and apparatus for producing a glass preform by depositing glass particles on a starting glass rod to create a soot layer thereon and by vitrifying the soot layer into a transparent glass preform.

As a well known method for producing a cylindrical glass preform, there is the OVD (outside vapor deposition (OVD)) method by which a soot preform is formed by depositing glass particles on the outer cylindrical surface of a starting glass rod rotating about its rotation axis. This method is carried out, for example, in a reaction vessel in which glass raw material (SiCl₄) together with combustible gas (H₂ and O₂) is fed through a burner, the glass raw material is hydrolyzed by flame and converted into glass particles that are then deposited in the form of a soot layer on the surface of the starting glass rod. The soot preform thus produced is dehydrated and sintered to form a transparent glass body having a predetermined outer diameter.

To obtain a transparent glass preform having a predetermined outer diameter, it is necessary to form a soot preform by depositing a specified amount of glass particles on a starting glass rod. Particularly, an optical fiber preform for obtaining an optical fiber must be fabricated under the control of the J ratio (the ratio of an outer diameter of a vitrified transparent glass preform to an outer diameter of a starting glass rod) so that the J ratio of the preform becomes equal to a predetermined value.
For this purpose, there is usually used a method with which a starting glass rod disposed in a reaction vessel is rotated about its axis and reciprocally moved a predetermined distance (traverse) by a multiple times relative to a burner in the longitudinal direction to deposit glass particles layer by layer on the surface of the starting glass rod. The detection and control of a weight of deposited glass particles are achieved by monitoring a growing outer diameter or an increasing weight of a soot layer deposit.

For example, Japanese Laid-Open Patent Publication No. 4-260633 discloses a method of measuring an increase in weight of the soot layer after each traverse (each turn of a reciprocal movement) of the starting glass rod and adjusting a speed of the final traverse to attain a desired weight of the soot preform. This method can adjust a final weight of the soot layers to a predetermined value but cannot detect whether glass particles are uniformly deposited on an effective surface area of the starting glass rod in its longitudinal direction. For example, in case of depositing glass particles on a starting glass rod by using a burner or burners, this method cannot determine what grams of glass particles were deposited on a predetermined surface area (position) of the starting glass rod in its longitudinal direction. It cannot accurately determine the weight of glass particles deposited on an effective portion if the weight of glass particles deposited changed on ineffective portions at both ends of the soot layers deposited on the starting glass rod. This is because information on the deposit fluctuation in the longitudinal direction during the depositing glass particles cannot be obtained.

An optical fiber preform fabrication method disclosed in Japanese Laid-Open Patent Publication No. 4-292434 preliminarily determines a ratio of a core to a cladding of a starting glass rod in the longitudinal direction and adjusts the traversing speed of a starting glass rod and the flow rate of glass raw material gas from a burner in accord with the core-to-cladding ratio fluctuation in the longitudinal direction to obtain a uniform glass particle deposit in the longitudinal direction of the preform. However, this method premises that the traversing speed of the starting glass rod and the flow rate of glass raw material gas are controlled based on the predetermined distribution of the core-to-cladding ratio fluctuations of the starting glass rod in the longitudinal direction.
However, in practice, the outer diameter of the core rod in the process of vitrifying transparently the soot layer formed thereon may vary if dummy rods attached to both ends of the core rod may have different properties such as viscosity and geometrical size. Therefore, a final core-to-cladding ratio of the glass preform may vary in the longitudinal direction of the starting glass rod. Such fluctuations cannot be eliminated by the above-described control and adjustment based on the preset value.

Japanese Laid-Open Patent Publication No. 2000-256034 discloses a method by which a surface temperature of a glass particle deposit in its longitudinal direction and a soot layer outer diameter are measured at a specified time interval during the glass particle deposition and the flow rates of hydrogen gas and oxygen gas is adjusted so as to obtain a uniform soot density (bulk density) or a uniform outer diameter of a soot layer. However, this method is intended to control a surface temperature of a glass particle deposit or an outer diameter of a soot layer by adjusting merely the flow rates of hydrogen gas and oxygen gas for combustion and does not consider the adjustment of the traversing speed and the flow rate of glass raw material gas. Therefore, the weight fluctuation of a glass particle deposit in its longitudinal direction may occur.

In production of a glass preform under the control of the J ratio, the weight of glass particles to be deposited is calculated according to the relationship between the outer diameter and the length of a starting glass rod to be used. However, starting glass rods may not always have the predetermined size in the outer diameter and the length. They may have variations of outer diameter in the longitudinal direction. The starting glass rod having two dummy rods welded to both ends thereof may have variations of outer diameter in the longitudinal direction at both ends of the starting glass rod in vitrifying to produce a transparent glass preform due to the disunity of the glass material between the starting glass rod and the dummy rods. The weight of glass particles in conical portions at the both ends of the soot layer may vary depending upon the outer diameter of the starting glass rod.
Namely, the glass preform having attained a target value of the glass weight or outer diameter of its vitrified transparent glass preform may not always attain the predetermined J ratio value due to the above-mentioned various factors. An optical fiber finally produced by drawing of the glass preform having a different J ratio and/or the J ratio fluctuation in the longitudinal direction may have the fluctuation of core-to-cladding ratio and the poor optical transmission characteristics.

### SUMMARY OF THE INVENTION

An object of the present invention is to provide a method of producing a glass preform by an OVD method by depositing glass particles on an external cylindrical surface of a starting glass rod to form soot layers and by consolidating it into a transparent glassy body, which method is capable of accurately adjusting a J ratio of the glass preform to a predetermined value.
Another object of the present invention is to provide a method of producing a glass preform having a uniform J ratio by adaptively adjusting the weight of a glass particle deposit on a starting glass rod based on the J ratio fluctuation distribution data obtained from the previously produced glass preforms. Another object of the present invention is to provide a method of producing a glass preform having a uniform J ratio, which uses the J ratio fluctuation distribution data of the previously produced glass preforms, which data were prepared for each of different kinds of starting glass rods having dummy rods welded to both ends thereof.
Another object of the present invention is to provide a method of producing a glass preform, wherein the weight of a glass particle deposit on a starting glass rod is adjusted by changing a flow rate of glass raw material gas in the longitudinal direction.
Another object of the present invention is to provide a method of producing a glass preform, wherein the weight of glass particle deposit on a starting glass rod is adjusted by changing a speed of relative movement of a starting glass rod and a glass particle producing burner in the longitudinal direction.

Another object of the present invention is to provide a method of producing a glass preform, wherein the weight of a glass particle deposit corresponding to a target J ratio is calculated from correlation data A between the weight and the J ratio Y (a ratio of an outer diameter of a glass preform to an outer diameter of a starting glass rod) of a plurality of previously produced starting glass rods and correlation data B between the outer diameter of the starting glass rod of the glass preform and the J-ratio fluctuation rate (the rate of a measured J ratio to a target J ratio) of the starting glass rod of the glass preform.

Another object of the present invention is to provide a method of producing a glass preform, wherein a J ratio of a glass preform for obtaining an optical fiber is set to a target value at which a wavelength dispersion value of the optical fiber can be constant.
Another object of the present invention is to provide a method of producing a glass preform, wherein a J ratio of the preform for obtaining an optical fiber can be adjusted to a target value even if an outer diameter of a core rod of a starting glass rod fluctuates in the longitudinal direction.
Another object of the present invention is to provide a method of producing a glass preform, wherein the distribution of fluctuations of a surface temperature of a glass particle deposit in the longitudinal direction and the distribution of fluctuations of an outer diameter of a glass particle body in the longitudinal direction are determined, the weight distribution of a soot layer newly deposited by every traverse of a starting glass rod is determined and the weight of glass particles for a subsequent traverse is adjusted to reduce the fluctuations of weight distribution of the newly deposited soot layer or fluctuation of total weight distribution of already deposited soot layers plus the newly deposited soot layer and finally obtain a uniform J ratio in the longitudinal of the glass preform.
Another object of the present invention is to provide a method of producing a glass preform, wherein the bulk density of a soot layer is determined from its surface temperature and the weight distribution of a soot layer is calculated from the bulk density and the outer diameter of the soot layer deposited.

Another object of the present invention is to provide an apparatus for producing a glass preform, which is provided with a soot position measuring device for measuring a position of a soot layer deposited in the longitudinal direction, a radiant thermometer for measuring a surface temperature of a glass particle deposit, a laser type distance measuring device for determining an outer diameter of a soot layer and an arithmetic unit for calculating the weight distribution of the soot layer from the soot surface temperature and the outer diameter of a glass particle deposit.

### BRIEF DESCRIPTION OF DRAWINGS

Fig. 1 is a schematic illustration of a glass particle depositing apparatus usable in embodiments of the present invention.
Fig. 2 is a graph depicting an example of supplying a stream of gas without changing its flow rate in the longitudinal direction.
Fig. 3 is a graph depicting an example of controlling a traversing speed without changing it in the longitudinal direction.
Fig. 4 is a graph showing an example of the J ratio fluctuation of a soot layer in the longitudinal direction for Example 1.
Fig. 5 is a graph wherein J-ratio values of Fig. 4 are plotted by inversed equivalences by making an averaged value equal to 1.
Fig. 6 is a graph showing an example of supplying hydrogen gas and oxygen gas by changing flow rates of the gases in the longitudinal direction for Example 1.
Fig. 7 is a graph showing an example of supplying glass raw material gas by changing its flow rate in the longitudinal direction.
Fig. 8 is a graph showing the exemplary fluctuation of the J ratio of a soot layer in the longitudinal direction while supplying gases by changing the gas flow rates in the longitudinal direction for Example 1.
Fig. 9 is a graph showing an example of the J ratio fluctuation of a soot layer in the longitudinal direction for Example 2.
Fig. 10 is a graph wherein J-ratio values of Fig. 4 are expressed by inversed values by making an averaged J ratio value equal to 1.
Fig. 11 is a graph showing an example of controlling a traversing speed by changing it in the longitudinal direction for Example 2.
Fig. 12 is a graph showing the exemplary fluctuation of a soot layer in the longitudinal direction when changing a traversing speed in the longitudinal direction.
Fig. 13 is a graph showing an example of correlation data A.
Fig. 14 is a graph showing an example of correlation data B.
Fig. 15 is a graph showing a difference between a target value and a measured value of the J ratio in the longitudinal direction for Example 4.
Fig. 16 is a graph showing a correction value for a flow rate of glass raw material gas for Example 5.
Fig. 17 is a graph showing measured values of the J ratio in the longitudinal direction for Example 5.
Fig. 18 illustrates an example of measuring an outer diameter of a soot layer when depositing glass particles thereon.
Fig. 19 is a graph showing a weight distribution measured after the first traverse in Example 6.
Fig. 20 is a graph showing a method of supplying glass raw material gas by changing its flow rate in the longitudinal direction during the second traverse in Example 6.
Fig. 21 is a graph showing a weight distribution measured after the third traverse for Example 6.
Fig. 22 is a graph showing a distribution of outer diameter values of a glass preform produced in Example 6.
Fig. 23 is a graph showing the distribution of outer diameter values of a glass preform produced in comparative example 3.

### PREFERRED EMBODIMENT OF THE INVENTION

The present invention provides a method of producing a glass preform by an OVD method by depositing glass particles on an external surface of a starting glass rod to create a soot layer and by dehydrating and sintering the soot layer to obtain a transparent glass preform having a J ratio accurately adjusted to a predetermined value. The J ratio of the glass preform is defined as a ratio of the outer diameter of the transparently vitrified portion of the glass preform to the outer diameter of the starting glass rod portion. Namely, the uniform quality of the glass preform can be achieved by severe control of the J ratio value in the production process. The optical fiber or other kinds of glass products produced from the glass preform thus fabricated with the high uniformity of its J ratio can possess excellent qualities.

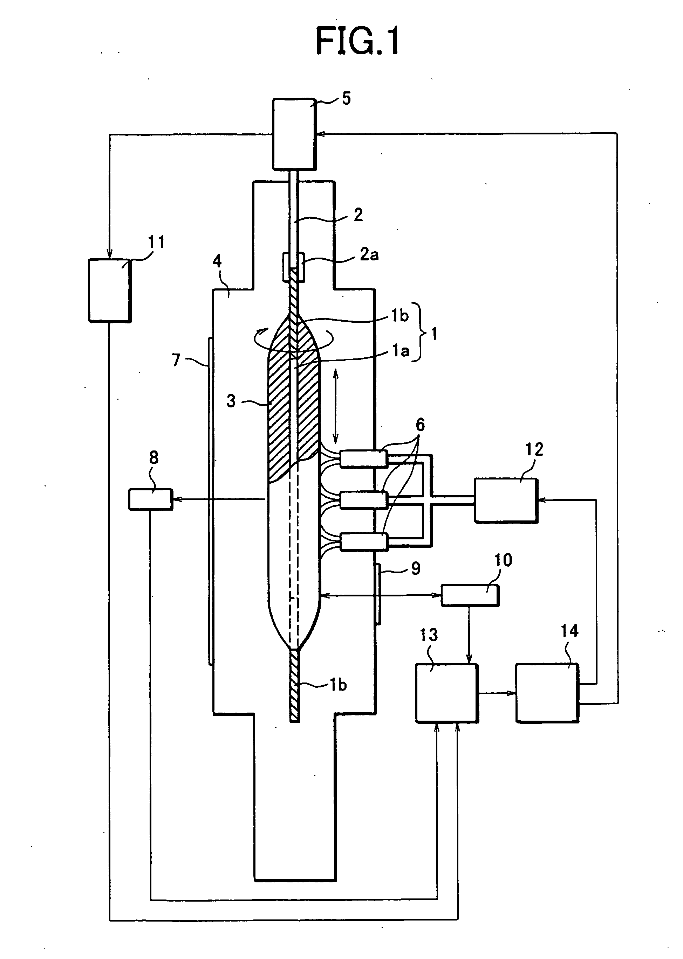

Referring to Fig. 1 illustrating an arrangement of a glass particle depositing apparatus, an embodiment of producing a glass preform according to the present invention will be below described. In Fig.1, there is shown a starting glass rod 1, a core rod 1a, a dummy rod 1b, a supporting bar 2, a pin joint 2a, a soot layer 3, a reaction vessel 4, a driving device 5, a burner 6, a longitudinal observating window 7, a temperature measuring device 8, a small observating port 9, a distance measuring device 10, a soot position measuring device 11, a gas supplying device 12, an arithmetic unit 13 and a control unit 14.

For production of an optical fiber preform, a core glass rod doped with a dopant for improving the refractive index or a core glass rod covered with a clad glass layer (hereinafter referred simply to as a core rod) is used as a starting glass rod 1. In production of a glass preform for producing a glass product other than the optical fiber, there is used a glass rod made of the same kind of glass material as that of the glass particles to be deposited. One end of the starting glass rod 1 is connected at its end (not to be subjected to soot layer 3) with a pin joint 2a to a supporting bar 2 that is supported rotatably by the driving device 5 and suspended in the reaction vessel 4. The starting glass rod 1 for fabricating an optical fiber preform is usually composed of a core rod 1a with two dummy rods 1b attached by fusing to its both ends.

The reaction vessel 4 may be for example of the vertical type with the driving device 5 disposed on the top thereof. The driving device 5 suspends and supports the starting glass rod 1 and drives the starting glass rod 1 into rotation about its axis and reciprocal movement in the vertical direction. The driving device 5 incorporates a load cell capable of subsequently measuring an increasing weight of a soot layer (growing by successively depositing glass fine particles). In the reaction vessel 4, a plurality of burners 6 are arranged for supplying flaming gas and glass raw material gas. Glass particles produced by the burners 6 are deposited on the external surface of the starting glass rod 1, creating a soot layer 3 thereon. Combustible gas and glass raw material gas are adjustably supplied from the gas supplying device 12 to each of the burners 6.
The reaction vessel 4 has a longitudinal observing window 7 made in the wall for observing a surface of a soot layer deposited of glass particles on the starting glass rod. It is further provided with the temperature measuring device 8 for measuring the surface temperature of the glass particle deposit and the distance measuring device 10 for measuring a distance from the external surface of the soot layer. In the wall of the vessel 4, the small round or rectangle observing ports 9 may be provided in place of the observing window 7 for the distance measuring device 10 disposed below and/or above the burners 6. Information from the driving device 5 for rotating and at the same time moving the starting glass rod 1 may be input to the soot position measuring device 11 for measuring positions on the soot layer 3 in the longitudinal direction.
Information on the glass particle deposit surface temperature measured by the temperature measuring device 8, information on the distance from the external surface of the soot layer measured by the distance measuring device 10, and information on the positions measured by the soot position measuring device 11 are input to the arithmetic unit 13 that in turn calculates the weight distribution of the soot layer 3 in its longitudinal direction based on the input information.
The control unit 14 adjusts the flow rate of glass raw material gas or the moving speed of a starting glass rod for subsequent deposition traverse based on the weight distribution calculated by the arithmetic unit 13 and performs the feedback control of the subsequent deposition traverse to reduce the soot weight variations.

The Embodiment 1 of the present invention uses J ratio data of previously produced glass preforms. The J ratio data is the distribution of the J ratio fluctuations of the produced glass preforms in the longitudinal direction. The J ratio fluctuation distribution data can be prepared for each of groups of preforms classified according to diameters of starting glass rods, length of starting glass rods, kinds of grass materials and types of glass particle deposition apparatus. It is desirable to update thus prepared the data of the J ratio fluctuation distribution by successively introducing therein data of newly produced glass preforms.
The J ratio fluctuation distrbution data is used to estimate the apt of J ratio fluctuation of a glass preform to be produced by depositing the glass particles in the same manner on the same kind of a starting glass rod. When producing a new glass preform according to the method of the present invention, the weight of glass particles to be deposited on the starting glass rod in the longitudinal direction is adjusted in advance based on the J ratio fluctuation distribution data. This ensures the uniformity of the J ratio of a transparently vitrified glass body of the produced glass preform in the longitudinal direction.
Particularly, when producing an optical fiber preform by using a starting glass rod being a core glass rod with dummy rods welded to both ends thereof, there may occur considerable fluctuations of the J ratio at the boundary (weld joints) between the core rod and the dummy rods. Although the starting glass rod itself has a uniform outer diameter along the full length of its body, the core rod may be subjected to a change in its outer diameter at the weld joints with the dummy rods when the glass particle deposit formed thereon is transparently vitrified. As the result, the produced glass preform may have the J ratio fluctuations in the longitudinal direction. This may be explained by that the core rod and the dummy rods are different from each other in viscosity and differently shrink in the longitudinal direction when the glass particle deposit of the preform is transparently vitrified. Since the above factor can be estimated in advance from the J ratio fluctuation distribution data, the uniform J ratio of the glass preform in the longitudinal direction can be achieved by depositing glass particles on the core rod with due adjustment based on the data.

The weight of glass particles to be deposited on the starting glass rod can be adjusted by changing the flow rate of glass raw material gas in the longitudinal direction of the starting glass rod. The adjustment of the flow rate of glass raw material gas is accomplished by increasing/decreasing a reference flow rate of the raw material gas. The reference flow rate may be for example a glass raw material gas flow rate used for producing a preceding glass preform, which is applied on the condition that a raw material gas flow rate is not adjusted in the longitudinal direction. When the J ratio is larger than the predetermined value at a predetermined position in the longitudinal direction, the flow rate of the glass raw material gas is decreased from the reference value at that position. When the J ratio is smaller than the predetermined value at a predetermined position in the longitudinal direction, the flow rate of the glass raw material gas is increased from the reference value at that position. It is desirable to adjust the flow rates of oxygen gas and hydrogen gas for combustion in accordance with the flow rate adjustments of the glass raw material gas. Thus, the generation and deposition of glass particles can be suitably maintained not to cause variations in bulk density of the deposited soot layer. The control of the flow rates of gases is executed by the gas supplying device 12 and control unit 14.

The weight of glass particles to be deposited on the starting glass rod can also be adjusted by changing the moving speed of the starting glass rod relative to the glass particle synthesizing burners in the longitudinal direction. The moving speed of the starting glass rod is adjusted by increasing or decreasing the reference speed value. This reference value may be for example the moving speed of the starting rod of the previously produced preform, which is used on the condition that the moving speed is not changed in the longitudinal direction. When the J ratio is larger than the predetermined value at a predetermined position in the longitudinal direction, the speed is decreased from the reference value at that position. When the J ratio is smaller than the predetermined value at a predetermined position in the longitudinal direction, the speed is increased from the reference value at that position.

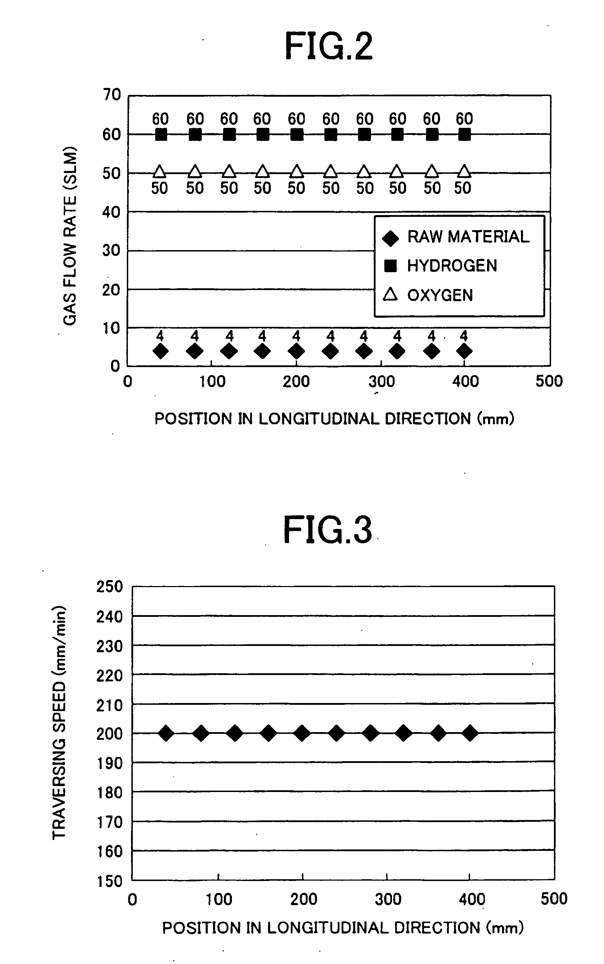

### (Example 1, Figs. 2 to 8)

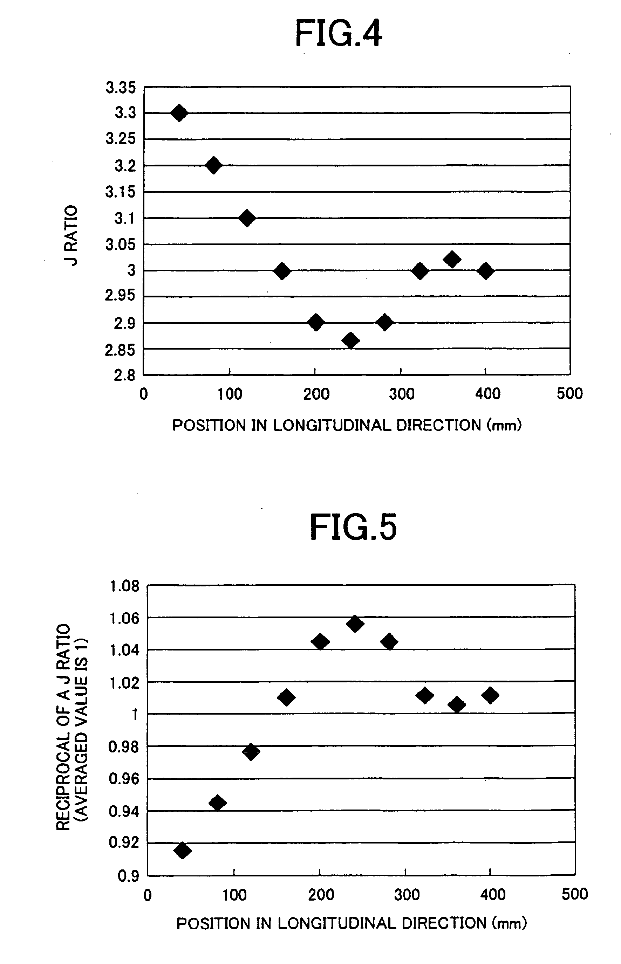

In graphs of Figs. 2 to 7, the axis of abscissa indicates the position on a starting glass rod in the longitudinal direction (the lower end of the rod corresponds to Position 0) and the axis of ordinate indicates the gas flow rate (Figs. 2, 6 and 7), the traversing speed (Fig. 3) and the J ratio (Figs. 4, 5 and 8).
With the arrangement of the production apparatus illustrated in Fig.1, glass particle deposition was conducted as follows:
A starting glass rod 1 was prepared by welding a pure quartz-glass-made dummy rod 1b of 30 mm in diameter and 600 mm in length to both ends of a 30mm-diameter by 400mm-length core rod 1a comprising a core and a cladding, which core rod is usable for production of an optical fiber preform. Three burners 6 of 30 mm in diameter were arranged at equal center-to-center intervals of 150 mm. The starting glass rod 1 was rotatably supported at one end by the driving device 5 and suspended vertically in the reaction vessel 4. The starting glass rod 1 was rotated at 40 rpm and, at the same time, reciprocally moved by a vertical distance of 1100 mm at a moving (traversing) speed of 200 mm/min.
Each of three burners was supplied with silicon tetrachloride (SiCl₄) (glass raw material) at a reference flow rate of 4 SLM (Standard Liter per Minute), hydrogen gas (H₂) at 60 SLM and oxygen gas (O₂) at 50 SLM for producing a flame and Argon gas at 2 SLM for sealing a stream of the hydrogen gas (H₂) and oxygen gas (O₂) from the burner nozzle.

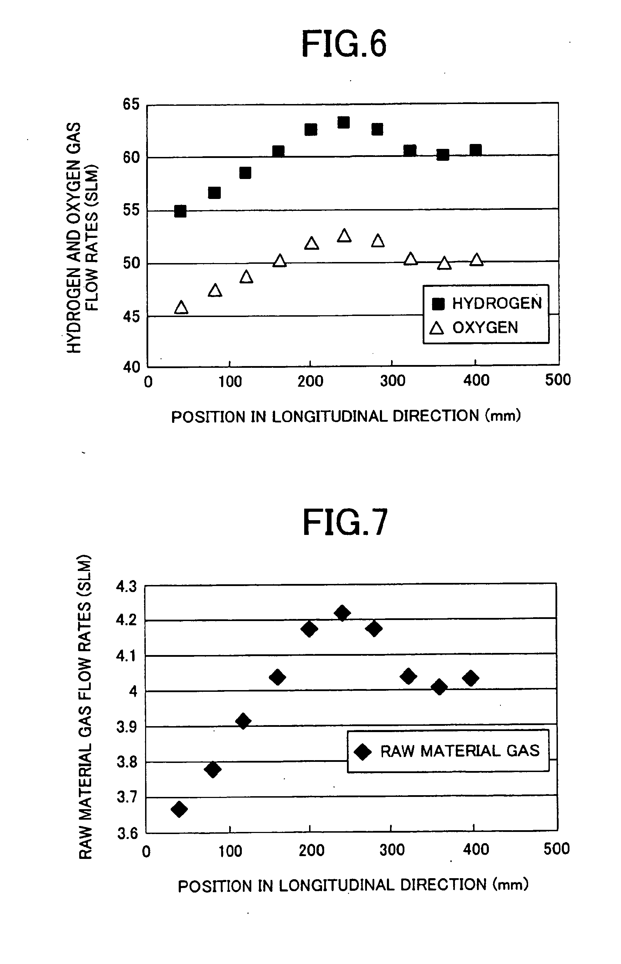

As shown in Fig. 2, each of the glass raw material gas, hydrogen gas and oxygen gas was fed at the reference flow rate and unchanged in the longitudinal direction for the first traverse. The traversing speed was also constant and unchanged for this traverse as shown in Fig. 3. The flow rates of these gasses were increased by 1% after each traverse (reciprocal movement) is complete. In the reaction vessel, the deposition of glass particles on the starting glass rod was stopped after completion of 100 traverses (reciprocal movements). The glass particle deposit (soot body) formed on the starting glass rod was dehydrated and sintered until the soot body was consolidated into transparent glassy body. After that, the J ratio was determined on the glass preform in the longitudinal direction. The measurement results show the J ratio fluctuations of the glass preform in the longitudinal direction as shown in Fig. 4. The J ratio fluctuation distribution data values of Fig. 4 were expressed by reciprocals making the averaged value equal to 1 as shown in Fig. 5.
The glass particle deposition on a new starting glass rod was conducted by changing the flow rates of gasses in accord with the J ratio fluctuation distribution data shown in Fig. 4 and Fig. 5 to attain the uniform J ratio of the glass preform in the longitudinal direction. The flow rates of the hydrogen gas and the oxygen gas were changed as shown in Fig.6. The flow rate of the glass raw material gas was changed as shown in Fig. 7. Other conditions were the same as described above. The J ratio of the glass preform thus produced was stable with a slight fluctuation in the longitudinal direction.

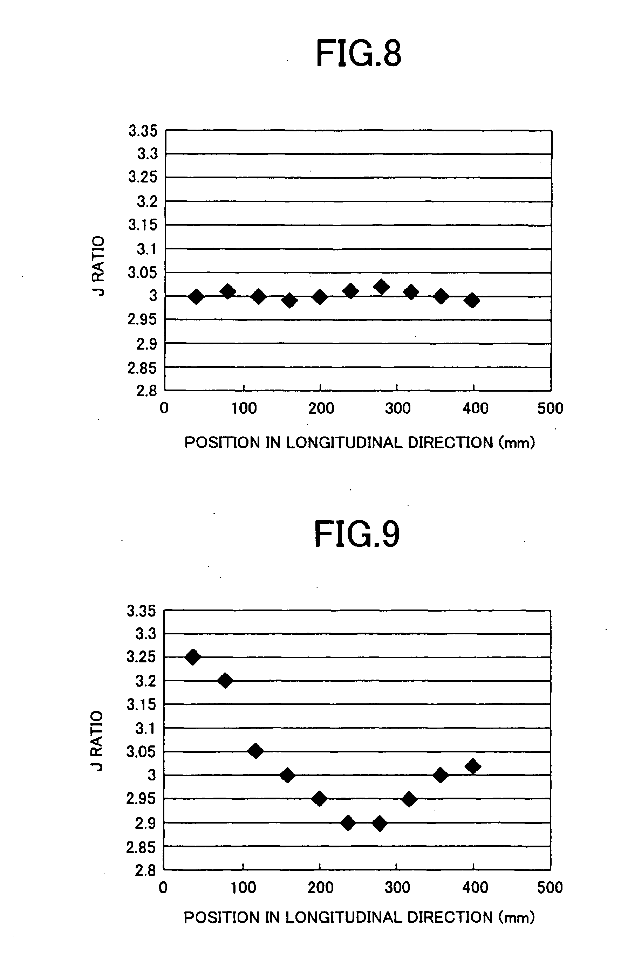

### (Example 2, Figs. 9 to 12)

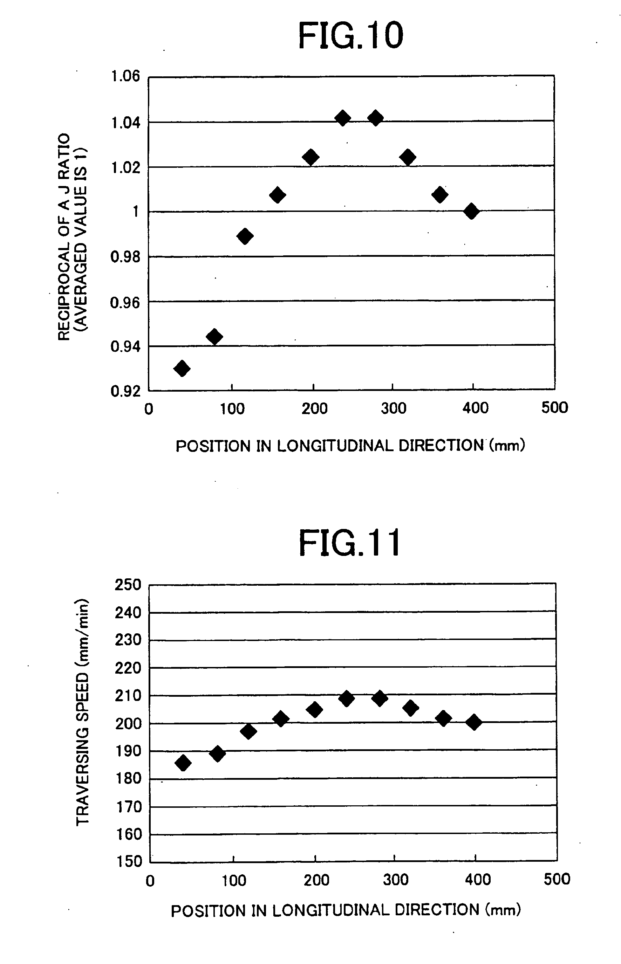

In graphs of Figs. 9 to 12, the axis of abscissa shows the position on the starting glass rod in the longitudinal direction (the lower end position is zero) and the axis of ordinate shows the traversing speed (Fig. 11) or the J ratio (Figs. 9, 10 and 12).
A first glass preform was fabricated under the same conditions as Example 1, excepting the use of an upper dummy rod doped with 0.2 wt.% of chlorine. The J ratio of the glass preform thus fabricated was measured. The results indicated the J ratio fluctuation as shown in Fig.9. The J ratio fluctuation distribution data of Fig. 9 can be expressed by reciprocals making the averaged J ratio value equal to 1 as shown in Fig. 10. The J ratio fluctuation of the preform is somewhat different from the J ratio fluctuation (Fig. 4) of the preform previously fabricated under the same conditions. This may be explained by the fact that the upper dummy rod had the different viscosity and caused a change in the outer diameter of the upper end of the core rod when the soot layer deposited is transparently vitrified.

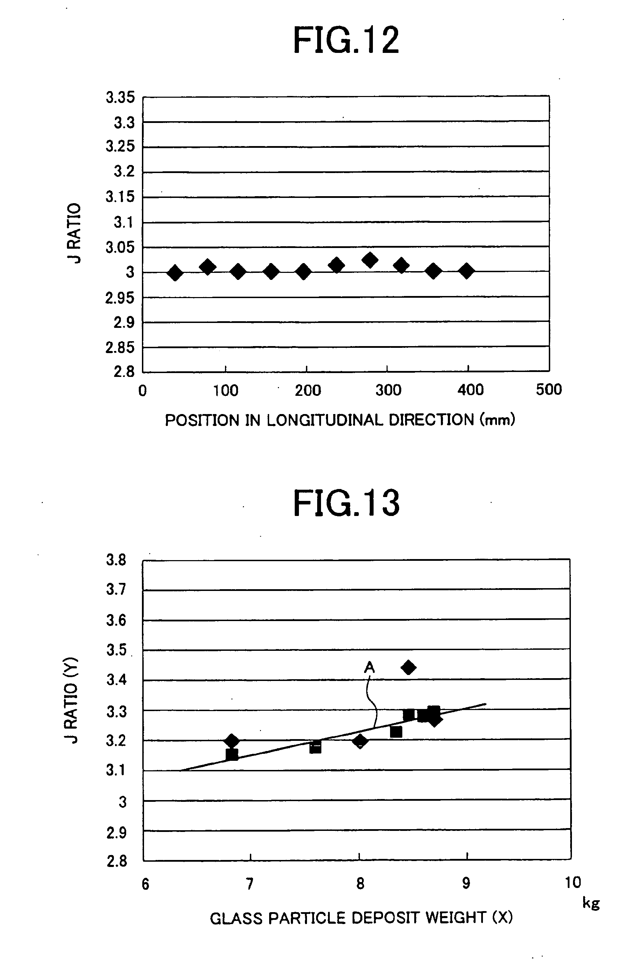

The glass particle deposition was conducted by changing the traversing speed based on the J ratio fluctuation distribution data shown in Fig. 9 and Fig. 10 to obtain the uniform J ratio of the glass preform in the longitudinal direction. Except for changing the traversing speed as shown in Fig. 11, all the other conditions were the same as described above. The glass preform thus fabricated had a stable J-ratio with a slight fluctuation in the longitudinal direction as shown in Fig. 12.

The above-described Examples 1 and 2 utilize the J ratio fluctuation distribution data obtained without adjustment of the weight of glass particle deposit in the longitudinal direction. However, the newly glass preform fabricated based on the above-mentioned fluctuation distribution data provides the new J ratio fluctuation distribution data. Consequently, a new subsequent preform may be fabricated by adjusting the weight of glass particle deposition based on the newly obtained J ratio fluctuation distribution data. In this case, the gas flow rate adjusted in the longitudinal direction (Figs. 6 and 7) or the traversing speed adjusted in the longitudinal direction (Fig. 11) is applied as the new reference data that is further adjusted for the new glass particle deposition process. The J ratio fluctuation distribution data may be of an average of the fluctuation data obtained from not only one glass preform but also a plurality of glass preforms produced.

The second example of the present invention uses data on the J ratio fluctuation, glass particle deposit weight and outer diameters of starting glass rods, which was obtained from a plurality of the previously produced glass preforms. Two kinds of data are prepared: correlation data A between the weight of deposited glass particles and the J ratio of the glass preforms fabricated by using starting glass rods having the same length and correlation data B between the outer diameter of the starting glass rods and the J ratio fluctuations of the glass preforms fabricated by using the respective starting glass rods. As described above for the first example, the correlation data A and B can be prepared for each of different diameters of starting glass rods, different lengths of the starting glass rods, different glass materials or different types of glass particle deposition apparatuses. The correlation data sets A and B can be updated by successively introducing data of newly produced glass preforms therein respectively.

The correlation data A shown in Fig. 13 represents the correlation between the deposited glass particles weight values and the J ratio values of plural glass preforms produced by depositing glass particles on respective starting glass rods having outer diameters of about 26 mm and the same length of 400 mm. The axis of ordinate shows the J ratio Y defined as a ratio of the outer diameter of the produced glass preform to the outer diameter of the starting glass rod while the axis of abscissa shows the total weight X of glass particles deposited on the starting glass rod, which was determined by subtracting the starting glass rod weight from the produced glass preform weight.
According to the correlation data A, the glass particle deposit weight decreases (increases) as the J ratio decreases (increases).

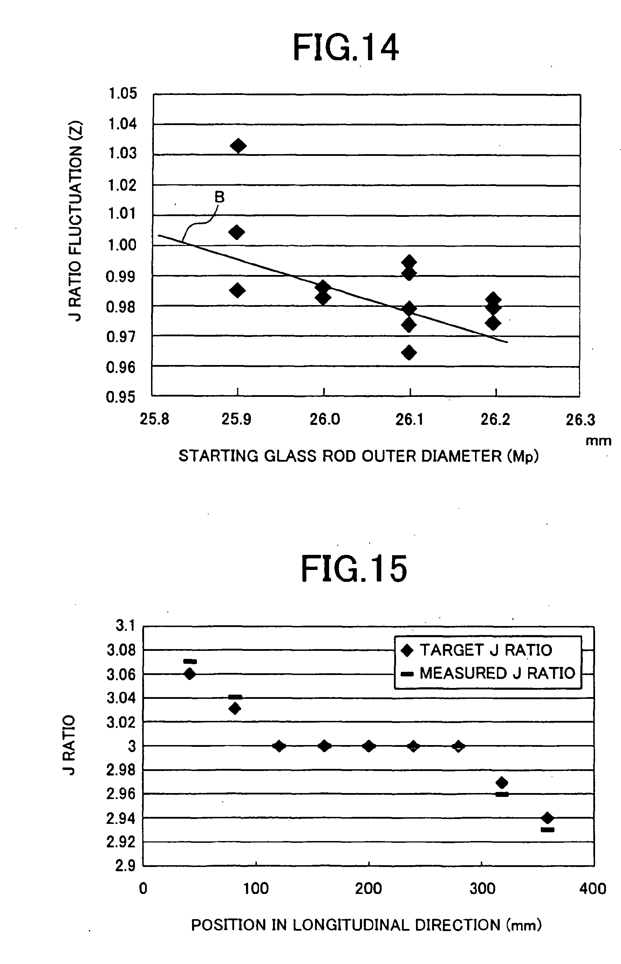

The correlation data B shown in Fig. 14 was prepared by plotting data obtained from the same plural glass preforms from which the data of Fig. 13 was obtained. The correlation data B indicates the correlation between the J ratio fluctuation rate Z of a glass preform and the outer diameter Mp of its starting glass rod. The axis of ordinate shows the J ratio fluctuation rate Z defined as a ratio of an averaged J ratio Y to a target J ratio Yo of a glass preform produced by depositing glass particles on a starting glass rod. In other words, the glass preform was produced by depositing on a starting glass rod an amount of glass particles estimated for obtaining a target J ratio value Yo but it had a J ratio fluctuation against the target value, which could be resulted from various production factors. The J ratio fluctuation rate Z shows a degree of the J ratio fluctuation from the target J ratio value, which fluctuation rate also depends on an outer diameter Mp of the starting glass rod.
According to the correlation data B, the J ratio fluctuation rate Z increases (decreases) as the outer diameter Mp of the starting glass rod decreases (increases). The outer diameter Mp of the starting glass rod is determined as an average of values measured at plural points thereon in the longitudinal direction. A total average Ma of the outer diameters Mp of plural starting glass rods is also determined in advance. The total averaged value Ma of the outer diameters Mp of the starting glass rods may be considered as a reference outer diameter value of the starting glass rod, which is shown in the correlation data A of Fig. 13. For the examples shown in Figs. 13 and 14, the total average value Ma of the outer diameters of the starting glass rods was 26 mm.

By using the correlation data A and B, it is possible to previously determine the weight of deposited glass particles of a new glass preform to attain a predetermined J ratio thereof. First, the outer diameter Mo (averaged outer diameter) of a starting glass rod prepared for production of a new glass preform. By applying the outer diameter value Mo of the starting glass rod to the correlation data B, a probable J ratio fluctuation rate Zo is determined. The J ratio fluctuation rate Za corresponding to the total average value Ma of the outer diameter of the starting glass rod is determined and then a difference between the J ratio fluctuation rate Zo and the J ratio fluctuation rate Za or a ratio of Zo to Za is determined.
In the correlation data A, a reference value of the outer diameter of the starting glass rod is the total average value Ma. Therefore, a target J ratio Yo for a new starting glass rod is corrected for the difference between Zo and Za or the ratio of Zo to Za. Corrected target J ratio Yo' is applied to the correlation data graph A and a target weight X of glass particles to be deposited is determined. The glass particle deposition is stopped when the weight of the soot body reached the target value X.

### (Example 3)

With the production apparatus arrangement illustrated in Fig. 1, the glass particle deposition was conducted as follows:
A starting glass rod 1 was prepared from a 26.1 mm diameter by 400 mm length core rod 1a comprising a core portion and a cladding portion by welding a pure quartz-glass-made dummy rod 1b to each end of the core rod. Three burners 6 of 30mm in diameter are arranged at equal intervals (with a center-to-center distance of 150 mm). The starting glass rod 1 was supported at its end by driving device 5 and suspended vertically in the reaction vessel 4 so that it could be rotated about its axis at 40 rpm and, at the same time, reciprocally moved up and down for a predetermined distance of 1100 mm at a moving (traversing) speed of 500mm/minute.
Each of three burners was supplied with silicon tetrachloride (SiCl₄) (glass raw material) at a flow rate of 4 SLM (Standard Liter per Minute), hydrogen gas at 60 SLM and oxygen gas at 50 SLM for producing a flame and argon (Ar) gas at 2 SLM for sealing the hydrogen gas (H₂) and oxygen gas (O₂) stream near the outlet of each burner.

To produce a glass preform having the target J ratio of 3.2 on the apparatus by the above-described method, the target glass particle deposit weight X was determined according to the correlation data A and B. From the correlation data B, the J ratio fluctuation rate Zo for the new starting glass rod (of 26.1 mm in outer diameter) was first determined as 0.978. On the other hand, the J ratio fluctuation rate Za for the starting glass rod (total averaged outer diameter 26.0 mm) of the correlation data was equal to 0.986. As the difference between the J ratio fluctuation rates Zo and Za was 0.008 (0.8%), the target J ratio of 3.2 is corrected to 3.2256 (3.2 x 1.008). From the correlation data A, the glass particle deposit weight X corresponding to the corrected target J ratio was determined as 7.923 kg.
The glass particle deposition was conducted at a constant traversing speed of the starting rod. The flow rates of glass raw material gas, hydrogen gas and oxygen gas were unchanged during each reciprocal movement of the starting rod in the longitudinal direction but increased by 1% after each traverse (reciprocal movement) was complete. In the reaction vessel, the glass particles produced by the burners were deposited on the surface of the rotating starting glass rod until the glass deposit weight became equal to target glass weight of 7.923 kg by the indication of the weight monitoring device. The glass deposit on the starting glass rod was dehydrated and sintered to create a transparent glassy body of the preform. After that, the final actual J ratio was determined at 10 points on the produced preform in the longitudinal direction thereof. The average of the J ratio values was 3.203. This value differs merely by 0.1% from the target J ratio value (3.2). In Example 3, the J ratio fluctuation in the longitudinal direction as considered in Examples 1 and 2 was ignored.

### (Comparative Example 1)

By using the same apparatus and the same method, a glass preform was produced by depositing glass particles on a starting glass rod of the same lot and the same diameter as those of the starting glass rod used in Example 3. Although the starting glass rod diameter had a difference of 0.1 mm from the total average diameter (26 mm), the target J ratio was not corrected. By applying the target J ratio of 3.2 without correction to the correlation data A (Fig. 13), a target glass deposit weight X of 7.568 kg was obtained.
As described in Example 3, the flow rates of raw material gas, hydrogen gas and oxygen gas were increased by 1% after each traverse (reciprocal movement) of the starting glass rod was complete. In the reaction vessel, the glass particles produced by the burners were deposited on the surface of the rotating starting glass rod until the glass deposit weight (in terms of glass weight) became equal to 7.568 kg. The glass deposit on the starting glass rod was hydrated and sintered to form a transparent glassy body. After that, the final actual J ratio was determined at 10 points on the preform in the longitudinal direction thereof. The average of the measured values was 3.15. This value considerably deviates from the target J ratio (3.2) by about 1.5%.

The correlation data A of Fig. 13 relates to the examples using starting glass rods having the same length. However, the data may be applied to starting glass rods having different lengths but the same outer diameter. A soot layer created on a starting glass rod by depositing glass particles thereon and by consolidating it into a transparent glass body comprises an effective portion of a uniform outer diameter and two ineffective tapered portions formed at both ends of the effective portion. In this instance, the effective portion of the soot body may have a uniform J ratio irrespective of the length of the starting glass rod. Since an increase or decrease of lengths of starting glass rods may be considered as an increase or decrease of lengths of the effective portion of the soot bodies formed on respective starting glass rods, it is represented by an increase or decrease of the glass weight of the uniform diameter portion of the soot body. The ineffective tapered portions of the soot body may be formed mainly on the dummy rod portions on which glass particles are not deposited and may be of a constant (fixed) weight on the condition that the starting glass rod has a uniform outer diameter.
When a reference core rod length is expressed by L₀, a core rod length to be determined is expressed by L₁ and the weight of glass particles deposited on the outer surface of the core rod of the length L₀ according to the correlation data A is expressed by X, the weight X' of glass particles deposited on the outer surface of the core rod of the length L₁ may have the expression X'=X(L₁/L₀).
Consequently, the correlation data A can be applied to starting glass preforms having different lengths by correcting the inclination of the correlation data A for a ratio of the core rod length L₁ to the core rod length L₀. It is also possible to prepare the correlation data A for respective lengths of starting glass rods.

Example 3 of the present invention is intended to set a J ratio of an optical fiber preform so that the preform may produce an optical fiber having a constant value of optical wavelength dispersion. To produce a glass preform for production of an optical fiber, a starting glass rod is usually prepared by welding a dummy rod to each of both ends of a core rod consisting of a core glass or a core/clad glass.
The core glass of the core rod is doped with dopant for raising a refractive index and has a specified glass refractive-index profile (distribution of refractive indices in the glass radial direction). The characteristic of an optical fiber may considerably depend upon the refractive-index profile, in particular, the value of the core refractive index and the core diameter. Therefore, the fluctuations of the core refractive index and the core diameter of the core rod in the longitudinal direction may cause variations of the wavelength dispersion of a finally obtainable optical fiber even if the fiber perform had the uniform J ratio in the longitudinal direction.

In view of the above problem, Example 3 of the present invention is directed to achieve a constant wavelength dispersion of the optical fiber in the longitudinal direction. The wavelength dispersion is a phenomenon that causes a light signal of a specified pulse width to spread out into a broader pulse as it travels along an optical fiber. If no dispersion of the specified wavelength of the light signal occurs, the signal can be transmitted without increasing the pulse width. This enables the optical fiber to possess a larger transmission capacity by increasing the number of pulses.
The wavelength dispersion depends on the refractive-index profile of the optical fiber. Even if the core rod has fluctuations of its refractive-index profile in the longitudinal direction, the wavelength dispersion can be compensated to be constant in the longitudinal direction of the optical fiber by adjusting the J ratio in the longitudinal direction. In other words, an amount of glass particles deposited on the core rod of a constant outer diameter is adjusted in the longitudinal direction thereof. In this instance, the J ratio may not completely be constant in the longitudinal direction but may be stable enough to attain the constant and stable optical characteristic of the finally obtainable optical fiber.

Accordingly, prior to the glass particle deposition, the refractive-index profile is measured at multiple points on a core rod portion of a starting glass rod to obtain the distribution of variations of the refractive-index profile in the longitudinal direction of the core rod portion. Based on the measured data on the refractive-index profile of the core rod portion, a target J ratio necessary for achieving a constant specified wavelength dispersion of a finally producible optical fiber along its full length is calculated. The target J ratio may not be uniform in the longitudinal direction of the glass preform if the refractive-index profile fluctuates in the longitudinal direction of the core rod. The weight of glass particles to be deposited on the core rod is controlled in the longitudinal direction thereof to attain the predetermined target J ratio of the optical fiber preform. The optical fiber preform thus produced and vitrified can be drawn into an optical fiber having the uniform wavelength dispersion.

The glass deposition weight can be adjusted by changing the flow rate of glass raw material gas as described for Example 1. It is desirable to change the supply of oxygen gas and hydrogen gas for producing a flame together with the change of the flow rate of the glass raw material gas.
The glass particle deposition weight control can be also accomplished by changing the speed of reciprocal movement of the starting glass rod in the longitudinal direction relative to the glass particles synthesizing burner.

### (Example 4, Fig. 15)

In graph of Fig. 15, the axis of abscissa shows the position on a core rod in the longitudinal direction (with the bottom end of the core rod being at zero position) while the axis of ordinate shows the J ratio.
In the apparatus illustrated in Fig. 1, the deposition of glass particles on a starting glass rod 1 was conducted. The starting glass rod 1 was prepared by welding two pure quartz-glass-made dummy rod 1b to respective ends of a 30 mm diameter by 400 mm length core rod 1a for an optical fiber comprising a core portion and a cladding portion. The distribution of refractive index values of the core rod 1a was measured at 9 points at equal spaces of 40 mm in the longitudinal direction of its body by using a preform analyzer and the characteristics of a finally obtainable optical fiber were estimated from the measured refractive index distribution pattern by using software program.
The obtained data were plotted on a graph shown in Fig. 15. As shown in Fig. 15, the target J ratio of the optical fiber preform from the lower end of the core rod was necessarily adjusted to 3.06 at the position of 40 mm, 3.03 at 80 mm, 3.00 at 120 mm, 3.00 at 160 mm, 3.00 at 200 mm, 3.00 at 240 mm, 3.00 at 280 mm, 2.97 at 320 mm and 2.94 at 360 mm to provide the final optical fiber with the stable wavelength dispersion of -20 ps/nm/km.

The target amount of glass raw material gas to be deposited on the core rod at each position thereon in the longitudinal direction thereof was determined by multiply the reference flow rate of glass raw material gas (unchanged in the longitudinal direction) by a normalized target J ratio with reference to an averaged J ratio being equal to 1. The glass particle deposition is conducted by adjusting the flow rates of glass raw material gas to respective target values at respective positions on the core rod in the longitudinal direction. After that, final J ratio was determined at the same points on the glass preform in the longitudinal direction thereof. The measurement results are shown in Fig. 15. The differences of the actual J ratio values from the target J-ratio values was within ±0.01 and the J ratio fluctuation was within ±0.33%. The glass preform was further drawn into an optical fiber whose wavelength dispersion was -20±1ps/nm/km in the longitudinal direction.

### (Comparative Example 2)

As a comparative example to Example 4, the glass particle deposition was conducted on a starting glass rod comprising a core rod having the same refractive index distribution but at a constant (unchanged) amount of a glass particle deposit uniformly in the longitudinal direction. The glass preform thus produced was further drawn into an optical fiber whose wavelength dispersion was then determined in the longitudinal direction. The fluctuations of -20±4ps/nm/km was measured.

Example 4 of the present invention is intended to achieve a constant J ratio of the glass preform for an optical fiber even if it is produced on a starting glass rod having the outer diameter fluctuation of a core rod in the longitudinal direction. For production of an optical fiber preform, there is used a starting glass rod prepared by welding a dummy rod to each of both ends of a core rod consisting of a core glass or a core/clad glass.
Welding the dummy rods to the core glass rod may cause the welded portions and near welded portions of the core rod to have fluctuations of the outer diameter. The outer diameter fluctuation may vary depending upon the welding conditions and the welder's skill. Therefore, the J ratio data obtained from the previously fabricated glass preforms cannot be used. In this case, it is necessary to directly measure the distribution of the outer diameter fluctuation of a new usable starting glass rod in the longitudinal direction, estimate the J ratio fluctuation of a producible glass preform accompanied with the distribution of the outer diameter fluctuation and conduct the glass particle deposition on the starting glass rod so that the estimated fluctuation may be reduced.

For this purpose, before the glass particle deposition, the outer diameter of the core rod portion of the starting glass rod is first measured at multiple positions thereon. The distribution of the outer diameter fluctuations of the core rod in the longitudinal direction is obtained from the measured values. An amount of glass particles to be deposited on the starting glass rod is adjusted based on the output distribution of outer diameter fluctuations so that the glass preform to be produced may have a uniform J ratio equal to the target value in the longitudinal direction.
The glass particle deposit weight can be adjusted by changing the flow rate of glass raw material gas in the longitudinal direction as described for Example 1. It is desirable to change the flow rates of oxygen gas and hydrogen gas for producing a flame together with the change of the flow rate of the glass raw material gas. The glass particle deposit weight control can be also achieved by changing the speed of reciprocal movement of the starting glass rod in the longitudinal direction relative to the glass particles synthesizing burners.

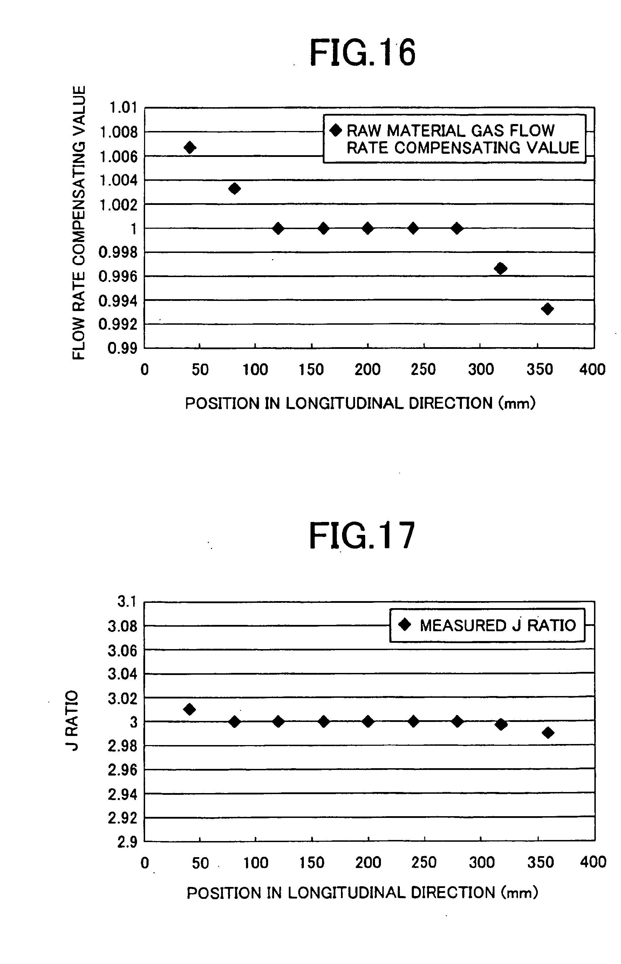

### (Example 5, Figs. 16 to 17)

In graphs of Figs. 16 and 17, the axis of abscissa shows the position on a core rod in the longitudinal direction (with the bottom end of the core rod being at zero position) while the axis of ordinate shows the compensating value (Fig. 16) and the J ratio (Fig. 17).
In the apparatus illustrated in Fig. 1, the deposition of glass particles on a starting glass rod 1 was conducted. The starting glass rod 1 was prepared by welding two pure quartz-glass-made dummy rod 1b to respective ends of 400 mm long core rod 1a for an optical fiber comprising a core portion and a cladding portion. The outer diameter values of the core rod 1a was measured at 9 points at equal spaces of 40 mm in the longitudinal direction of its body by using a non-contact type outer diameter measuring device. The measured values of the core rod outer diameter from the lower end of the core rod were 30.6 mm at the position of 40 mm, 30.3 mm at 80 mm, 30.0 mm at 120 mm, 30.0 mm at 160 mm, 30.0 mm at 200 mm, 30.0 mm at 240 mm, 30.0 mm at 280 mm, 29.7 mm at 320 mm and 29.4 mm at 360 mm. The amount of glass particles deposited in the longitudinal direction was adjusted to attain the uniform target J ratio 3 of the glass preform by compensating for the measured outer diameter fluctuations of the core rod. The amount of glass particles was adjusted by changing the flow rate of the glass raw material gas in accordance with the preset target flow rate of glass raw material gas, which was determined by multiplying the reference flow rate of glass raw material gas (unchanged in the longitudinal direction) by a compensating value shown in Fig. 16. The compensating value has an expression {(E-1)/3+1} where E is an outer diameter of the glass preform when an averaged outer diameter of the core rod is equal to 1.
The glass particle deposition was conducted by the above-described method. The final J ratio of the glass preform thus fabricated was then determined. The measurement results are shown in Fig. 17. The actual J ratio fluctuations from the target value 3 were merely ±0.33% at both end portions of the core rod.

Example 5 of the present invention is intended to achieve the highly accurate uniformity of J ratio of a glass preform produced without using the J ratio data of the previously produced glass preforms and to achieve the highly accurate uniformity of the weight of glass particles deposited on the surface of a starting glass rod in the longitudinal direction.
Namely, as far as the weight of glass particles deposited on the starting glass rod is uniform in the longitudinal direction, the outer diameter fluctuation and the bulk density fluctuation of the glass particle deposit in the longitudinal direction may be allowable. The soot preform formed of glass particles deposited uniformly in weight on the starting glass rod in the longitudinal direction thereof is then dehydrated and sintered to create a glass preform which can attain a very slight outer diameter fluctuation and the uniform J ratio in its longitudinal direction as far as the starting glass rod had the uniform outer diameter.

The weight of glass particles deposited on the starting glass rod in the longitudinal direction can be determined from the outer diameter and the bulk density of the soot layer at predetermined positions thereon in the longitudinal direction thereof. The outer diameter of the soot layer can be calculated from a distance to the surface of the soot layer, which was measured by the distance measuring device. Since the bulk density of the soot layer has a constant relation to a surface temperature of the glass particle deposit, the surface temperature of the glass particle deposit is measured by the radiant thermometer and then the bulk density of the soot layer is calculated from the measured surface temperature. The weight of glass particle deposit can be easily calculated by multiplying the bulk density by an increased volume determined by the soot layer outer diameter. The weight distribution of glass particles in the soot layer in the longitudinal direction can be determined by repeating the above-mentioned measurements at different predetermined positions on the soot layer in the longitudinal direction thereof.

The weight distribution of glass particles in the soot layer in the longitudinal direction is calculated every one traverse or every specified traverse. To reduce weight fluctuation distribution, the weight of glass particles to be deposited by a subsequent traverse is controlled by adjusting the flow rate of glass raw material gas and the traversing speed based on the calculated weight distribution. The above-described measurement and adjustment are repeated to obtain a uniform weight distribution or a predetermined final weight distribution of deposited glass particles in the soot layer in the longitudinal direction. The glass particle deposit is then transparently vitrified to form a cylindrical glass preform having a uniform outer diameter or a constant ratio of the glass perform outer diameter to the starting glass rod diameter.

In the apparatus illustrated in Fig. 1, the temperature measuring device 8 for determining the surface temperature of glass particle deposit is desirably of the radiation thermometer type capable of measuring the intensity of radiation from the glass particle deposit surface through the longitudinal observing window 7. A thermo-viewer type radiation thermometer capable of measuring radiation in a wide range is most suited for this purpose. A spot-type radiation thermometer having a large measurement error must be avoided to use. The temperature measuring device 8 is desirable to measure the surface temperature of the hottest position of the soot layer 3, for example, temperature of the soot layer surface area being heated by a flame of the burner 6. The surface temperature of the glass particle deposited on the rotating starting glass rod is continuously measured by the temperature measuring device 8. The temperature distribution on the soot layer surface in the longitudinal direction is determined based on averages of the surface temperature values measured at respective positions. Using the determined temperature distribution, the bulk density ρ (g/cm³) of the soot layer at respective positions in the longitudinal direction is calculated according to a relational formula obtained based on the accumulated data.

A laser type distance measuring device capable of distantly measuring the distance with no contact thereto is suitable to use as the distance measuring device 10 for measuring the distance to the surface of the soot layer 3. The long-distant type laser distance measuring device (measuring distance of 1 to 2 m) is disposed as far as possible from the reaction vessel 4 to avoid a possible trouble with thermal effect from the high temperature wall of the vessel. The small observing port 9 may be provided in such a desirable portion of the vessel wall that a laser beam from the laser type distance measuring device can pass below the burner 6 maintaining a space of at least 5 centimeters from the burner bottom. If the laser beam passes a space close to the burner 6, it may collide with glass particles floating in the vessel, resulting in erroneous measurement. The distance measuring device 10 may be disposed above the burner 6 or the distance measuring device 10 may be arranged above and below the burner 6.

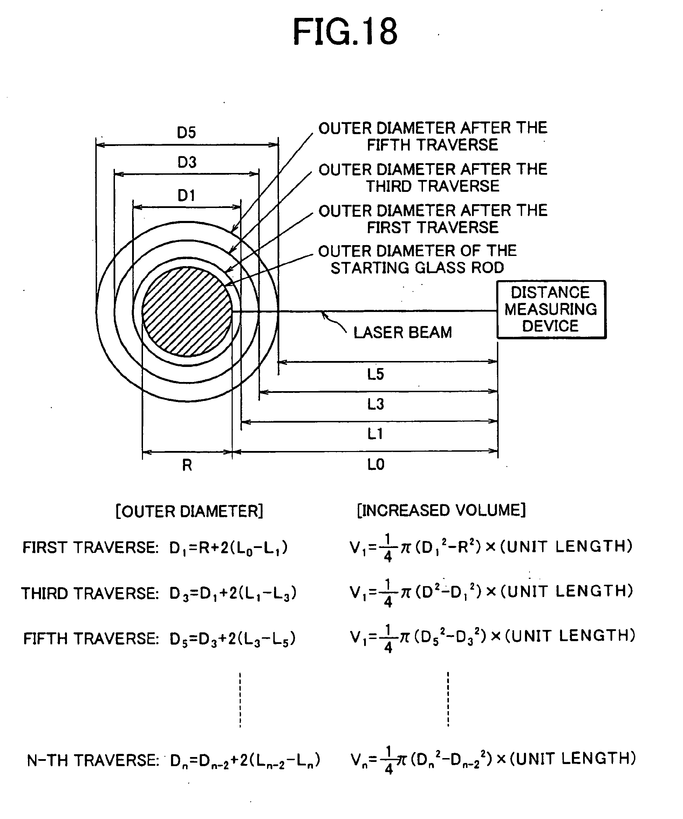

Fig. 18 depicts how to calculate an outer diameter of a soot layer. The outer diameter (R) of a starting glass rod 1 and the distribution of the outer diameter fluctuations in the longitudinal direction are previously determined. The starting glass rod 1 has a frosted ring portion not allowing a laser beam to pass and the outer diameter of this frosted ring portion is previously measured. For the starting glass rod 1 having dummy rod 1b welded to respective ends thereof, the frosted ring portion may be made on the dummy rod. The starting glass rod 1 is hung in the reaction vessel 4 and the distance (L₀) from the distance measuring device 10 to the surface of the starting glass rod 1 is determined by hitting a laser beam at the frosted glass portion. Thus arithmetic unit recognizes a reference outer diameter. The laser beam shall perpendicularly hit at a center on the starting glass rod 1.

Then, glass particles produced in a flame gas and glass raw material gas by the burner 6 is deposited to the surface of the starting glass rod 1 rotating about its axis and, at the same time, traversing downward by a predetermined distance. After a first layer of glass particles is deposited on the starting glass rod by the first traverse, a distance (L₁) from the distance measuring device 10 to the surface of the glass particle deposit (soot layer 3) is measured at respective predetermined positions in the longitudinal direction. From these measured values, the outer diameters (D₁) of the soot layer after the first traverse are determined at the predetermined positions in the longitudinal direction and the distribution of the outer diameter values of the soot layer in the longitudinal direction is calculated. An increased cross-sectional area of the soot layer 3 in the radial direction is calculated from the outer diameter (D₁) of the soot layer and the outer diameter (R) of the starting glass rod. The distribution of increased volumes (V₁) of the soot layer in the longitudinal direction is then determined by multiplying the increased cross-sectional areas by the unit length value (cm).

The second traverse is upward movement of the starting rod, which is reverse to the first traverse. Accordingly, in the case where the distance measuring device 10 arranged only below the burner 6, the outer diameter of the soot layer does not change and therefore the distance to the soot layer surface is not measured for the second traverse. However, it is desirable to measure the distances to the soot layer surface for the first traverse and the second traverse and determine an average of the measured values in order to increase the accuracy of the distance measurements. In case where two distance measuring devices 10 are arranged respectively above and below the burner 6, the distance to the surface of the second glass particle layer deposited by the second traverse is measured by the distance measuring device disposed above the burner 6. The surface temperature of glass particle deposit and the bulk density distribution of the same deposit are determined every traverse irrespective of whether the outer diameter of the soot layer is measured or not.

The third traverse is downward movement of the starting glass rod on which the third layer of glass particles is deposited, as in the case of the first traverse. The distance (L₃) from the distance measuring device 10 to the surface of the soot layer 3 is measured at predetermined positions thereon in the longitudinal direction. Based on the distance (L₁) measured in the first traverse or the second traverse and the distance (L₃) measured in the third traverse, the outer diameter (D₃) of the soot layer 3 after the third traverse is calculated at the predetermined positions thereon in the longitudinal direction. An increased cross-sectional area of the soot layer 3 in the radial direction after the third traverse is calculated from the outer diameter (D₃) of the soot layer and the outer diameter (D₁) of the soot layer after first traverse. An increased volume (V₃) of the soot layer per unit length in the longitudinal direction is then calculated by multiplying the increased cross-sectional area by the unit length (cm). Similarly, for the subsequent traverses from the fifth traverse to the final traverse, the distances (Ln) from the distance measuring device 10 to the surface of the glass particle deposit are measured and the outer diameters (Dn) and the increased volumes (Vn) per unit length of the soot layer are calculated.

Thus, a distance (Ln) to the external surface of the soot layer is measured and an increased volume (Vn) of the soot (glass particles) deposited on the starting glass rod 1 in the longitudinal direction is calculated. By multiplying the increased volume (Vn) by the bulk density ρn (g/cm³) at each position on the soot in longitudinal direction, which was determined from the surface temperature of the soot deposit for each traverse, the weight distribution of glass particles deposited in the longitudinal direction can be determined. This weight distribution measurement and calculation are conducted for the full length of the effective area of the soot layer 3. Namely, the weight distribution of the first layer in the longitudinal direction is determined and the obtained data is used for depositing glass particles in the second layer. The flow rate of glass raw material gas or the traversing speed of the second traverse for depositing the second soot layer is adjusted by control unit 14 so that the variation occurred in the weight distribution of first layer can be compensated.
The above-described measurement, calculation and adjustment control are repeated every traverse or every specified traverse until the soot layer weight attains the predetermined value. This makes the weight of the deposited soot layer 3 uniform over the full length of its effective area.
The soot preform thus created is then dehydrated and sintered to yield a uniform transparent glass preform having a reduced fluctuation of its outer diameter in the longitudinal direction.

A starting glass rod may have uneven outer diameters in the longitudinal direction. For example, the starting glass rod 1 is a core glass rod (for production of an optical fiber), whose outer diameter fluctuates in the longitudinal direction, or a glass rod consisting of a core portion and a cladding portion, which has uneven ratios of the core diameter to the cladding diameter in the longitudinal direction. In such cases, the starting glass rod shall be previously inspected for its outer diameter fluctuation and core-to-cladding ratio fluctuation in the longitudinal direction. Soot layer deposition shall be then conducted in view of the distribution of the outer diameter fluctuation and core-to-cladding ratio fluctuation of the starting glass rod. Namely, the weight distribution of glass particles in the soot layer in the longitudinal direction is adjusted so that it may cause the ratio of core diameter to glass preform diameter to be uniform. In this instance, the weight distribution of the glass particle deposit in the longitudinal direction is not necessarily uniform. The glass particle deposit can be vitrified into a transparent glass preform having the uniform ratio of core diameter to glass preform diameter in the longitudinal direction.

A weight of glass particles to be deposited can be adjusted by two methods. The first method is to increase or decrease the flow rate of glass raw material gas from the burner 6 at necessary positions in the longitudinal direction at a constant traversing speed of the starting rod. The second method is to change the traversing speed of the starting glass rod at a constant flow rate of glass raw material gas from the burner 6. The first method has an advantage of easy control operation since it adjusts merely the flow rate of glass raw material gas by using a mass flow controller (MFC). The second method requires the provision of a fine variable speed controller since the weight of glass particles to be deposited is adjusted by increasing or decreasing the moving speed of the starting glass rod. It is also possible to simultaneously adjust and control both the moving speed and the flow rate of glass raw material gas. However, this requires complicated control operation. It is desirable to increase or decrease the flow rates of oxygen gas and hydrogen gas in accord with the adjustment of the traversing speed and/or the flow rate of glass raw material gas.

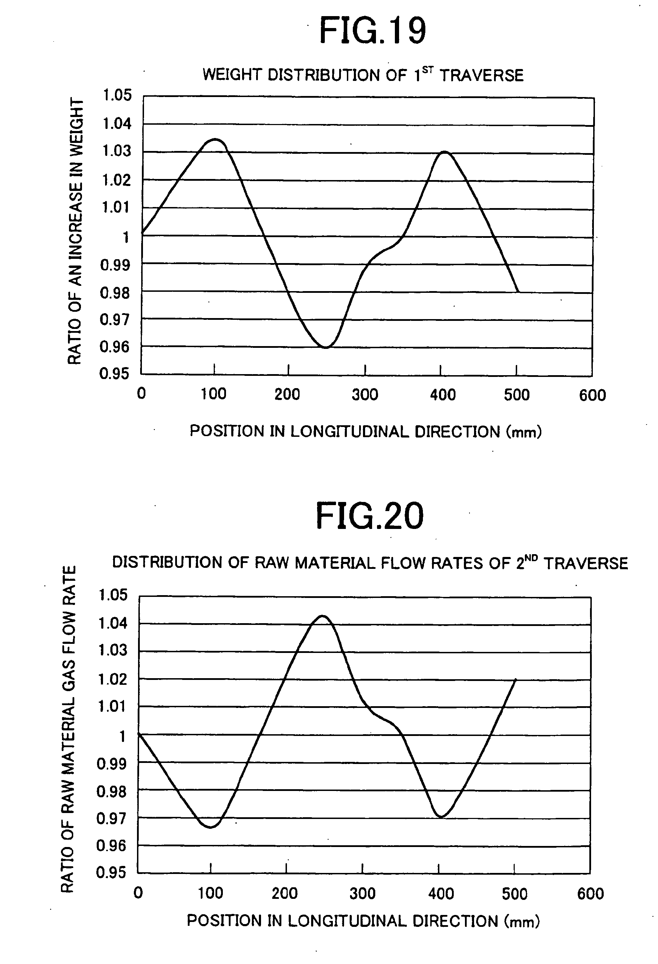

### (Example 6, Figs. 19 to 22)

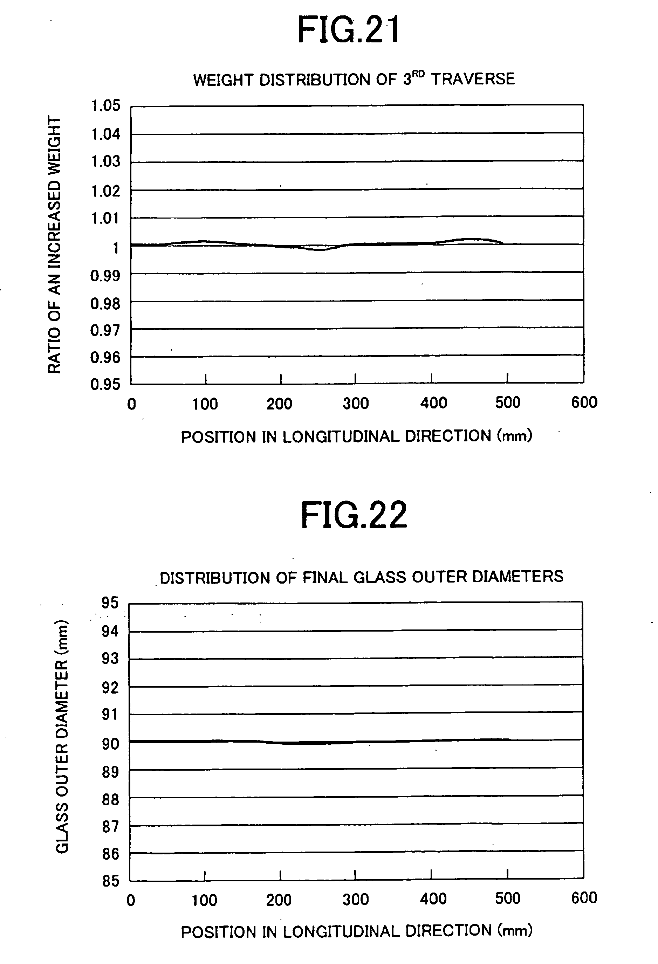

In graphs of Figs.19 to 22, the axis of abscissa shows positions on a starting glass rod in the longitudinal direction (with its lower end at the position "0") while the axis of ordinate shows an increased weight (Figs. 19 and 21), flow rates of glass raw material gas (Fig. 20) and an outer diameter of the glass preform (Fig. 22).
With the arrangement of the production apparatus shown in Fig. 1, deposition of grass particles on a starting glass rod was conducted. A 30 mm diameter by 500 mm length core rod for an optical fiber consisting of a core portion and a cladding portion and having a uniform outer diameter and a uniform core-to-cladding ratio in the longitudinal direction was used as the starting glass rod 1. Two 30mm-outer-diameter dummy rods 1b made of pure quart-glass-made having a frosted surface portion were welded by fusing to both ends of the core rod 1a. One of the dummy rod portions 1b was connected to a supporting bar 2 by a pin joint 2a and the starting glass rod was supported by a driving device 5 and vertically suspended therefrom into the reaction vessel 4. A laser type distance measuring device was used as the distance measuring device 10 and disposed below the burner 6 keeping a space of 100 mm from the burner bottom in such a position that a laser beam from the device can hit at the center of the starting glass rod 1 at a right angle. A thermo-viewer having a wide measuring range was used as the temperature measuring device 8. This device was mounted movably in the longitudinal of the starting glass rod 1. 1 set of the burner 6 having a diameter of 60 mm was provided for supplying 12 SLM (Standard Liter per Minute) of glass raw material SiCl₄, 240 SLM of H₂ gas and 120 SLM of O₂ gas for producing a flame and 6 SLM of Ar gas for shielding a stream of H₂ and O₂ near the outlet of the burner 6. Although one burner 6 was used in the shown case, it is possible to use a plurality of burners.
Before starting the deposition of glass particles, the distance (L₀) from the distance measuring device 10 to the surface of the starting glass rod was measured with a laser beam directed to the frosted glass surface of the dummy rod portion 1b. Thus arithmetic unit 13 recognized that the outer diameter of the measured L₀ was 30 mm. Then, the starting glass rod was rotated at 40 rpm and at the same time moved downwards for example at 200 mm per minute to begin the first traverse. The traverse distance of the starting glass rod 1 was 1100 mm.

The surface temperature of glass particle deposit (soot layer) is measured by the temperature measuring device 8 and an average of temperatures measured at respective positions is calculated. The bulk density ρ₁(g/cm³) of the soot layer is calculated from the surface temperature values and the bulk density distribution in the longitudinal direction is determined. During the downward traverse of the starting glass rod, the distance (L₁) from the surface of the soot layer deposited on the surface of the starting glass rod to the distance measuring device was measured at respective positions thereon by a laser beam from the distance measuring device 10. From the distance (L₀) and the distance (L₁), the distribution of the fluctuations of the increased outer diameter (D₁) of the soot layer in the longitudinal direction were determined. The weight distribution of glass particles in the soot layer in the longitudinal direction was then calculated from the bulk density distribution and the outer diameter fluctuation distribution.

Fig. 19 is a graph showing the weight distribution of a soot layer deposited on the starting glass rod 1 after completion of the first traverse. In Fig. 19, the axis of abscissa shows positions of the starting glass rod 1 in the longitudinal direction and the axis of ordinate shows a weight increase ratio at each position with reference to the average value made equal to 1. The graph indicates that a large increase in weight occurred at the positions 100 mm and 400 mm from one end of the starting glass rod 1 and a small increase occurred at the position 250 mm therefrom. The arithmetic unit 13 performs operations on various information and weight distribution data obtained by the first traverse and transfers the operation results to the control unit 14 that in turn adjusts the amount of glass particles to be deposited by the second traverse based on the received data.
In the second traverse, the starting glass rod 1 is moved upward, reverse to the first traverse. In this instance, the measurement of the outer diameter of the soot layer 3 below the burner 6 was omitted since the diameter of the soot layer 3 does not change below the burner 6. However, if the distance measuring device is provided above the burner 6, the outer diameter of the soot layer can be measured in the second traverse. In this instance, the outer diameter fluctuation of the soot deposit can be measured every traverse. Since at least 100 traverses shall be done to attain a predetermined value of the glass particle deposit amount, the outer diameter measurement of the soot layer may be conducted every downward traverse or upward traverse. It is also possible to further reduce the number of measurements if fluctuation of the increasing weight is slight. It is desirable to carry out the measurement of surface temperature of the glass particle deposit every traverse.

Fig. 20 is a graph showing the distribution of the flow rate of glass raw material gas at respective positions in the longitudinal direction, which is preset for the second traverse based on the weight distribution measured in the first traverse. In Fig. 20, the axis of abscissa indicates positions on the starting glass rod 1 in the longitudinal direction (with its lower end at "zero" position) and the axis of ordinate indicates the ratio of the flow rate of glass raw material gas at each position with reference to the average weight value equal to 1. This graph (Fig. 20) has the inverse relationship with the graph of Fig. 19. Namely, in the second traverse, the flow rate of glass raw material gas is decreased at positions 100 mm and 400 mm at which a large increase in weight (peak) is found in the graph of Fig. 19, and it is increased at the position 250 mm at which a least increase (trough) is found in the graph of Fig. 19. When the new weight distribution was not measured in the second traverse, the third traverse may be conducted at a reference flow rate of glass raw material gas to make a uniform glass particle deposit. It is also possible to adjust the flow rate of glass raw material gas for the second traverse to compensate one half of weight variation resulted from the first traverse and the flow rate of glass raw material gas for the third traverse to compensate the remaining variation. The measurement of surface temperatures of the glass particle deposit was conducted in the second traverse to obtain data for calculation of the weight distribution for the third traverse.

Fig. 21 is a graph showing the weight distribution measured and calculated in the third traverse. Similar to the graph of Fig.19, the axis of abscissa indicates positions on the starting glass rod 1 in the longitudinal direction and the axis of ordinate indicates a ratio of weight increase at each position to the averaged weight increase of 1. In Fig. 21, the ratio of a total weight increase determined by multiplying the weight increased by glass particles newly deposited in the second and third traverses by the previously measured and calculated weight increase shown in Fig. 19. It is also possible to calculate the weight distribution of newly deposited glass particles and compensate the fluctuation by a subsequent traverse. However, the totally increased weight distribution is preferable to use since it can reduce the accumulation error and improve the accuracy of the adjustment. As is apparent from the graph of Fig. 21, the fluctuations of increased weight at respective positions are smaller than the fluctuations shown in Fig.19.

To produce a finally vitrified transparent glass preform of the target soot layer thickness of 30 mm (90 mm in outer diameter of the glass preform), 155 traverses were conducted and the final 156-th traverse was conducted at an increased traversing speed of 400 mm/min to adjust the total weight of glass particle deposit. The soot preform thus formed was dehydrated and sintered to create a transparent glass preform.
Fig. 22 is a graph showing the distribution of the measured outer diameter values of the transparent glass preform in the longitudinal direction. The glass preform produced has the uniform outer diameter of about 90 mm over the full length of its effective portion. The ratio of core diameter to cladding diameter of the glass preform over the full length of its effective portion was also substantially uniform.

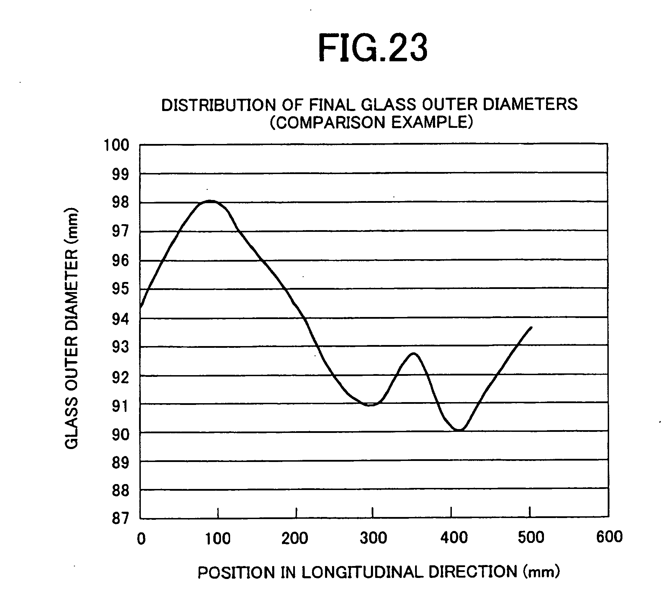

### (Comparative Example 3, Fig. 23)

As a comparative example to Example 6, the deposition of the soot layer 3 on the same type starting glass rod 1 was conducted by using the same burner 6 to produce the glass preform of 90 mm in diameter. In this example, the thermo-viewer and the laser type distance measuring device were not disposed. Namely, the outer diameter and the surface temperature of the soot layer were not measured for adjust control. The burner 6 supplies glass raw material SiCl₄ (silicon tetrachloride) at a constant flow rate of 12 SLM (Standard Liter per Minute), hydrogen (H₂) at 240 SLM and oxygen (O₂) at 120 SLM for producing a flame and Argon gas at 6 SLM for sealing the H₂ and O₂ flame from the outlet of the burner 6. The number of traverses was 156 as in the example 6. The created soot preform was dehydrated and sintered to form a transparent glass preform.
Fig. 23 is a graph showing the distribution of outer diameter values of the glass preform in the longitudinal direction produced in the comparative example 3. The outer diameter of the glass preform considerably fluctuates in the longitudinal direction and the average value of the outer diameters in the longitudinal direction considerably exceeds the target value 90 mm.

According to the fifth embodiment of the present invention, it is possible to accurately deposit a predetermined amount of glass particles on the surface of a starting glass rod in the longitudinal direction. It is also possible to produce a glass preform having a uniform outer diameter in the longitudinal direction or a glass preform having a uniform J ratio in the longitudinal direction without using data of previously fabricated glass preforms.

The above-described embodiments 1 to 5 may be carried out individually and in several combinations. For example, an amount of glass particles to be deposited on a starting glass rod for producing a new glass preform having a target J ratio is calculated from the data obtained by the method of Example 2. The fluctuation of outer diameters of a core rod in the longitudinal direction is then determined by the method of Example 4 in addition to Example 2. The amount of glass particles to be deposited on the core rod in the longitudinal direction can be thus adjusted by the combination of Examples 2 and 4.

## Claims

1. A method of producing a glass preform by
successively depositing glass particles on an external cylindrical surface of a starting glass rod (1) by an OVD (Outside Vapor Deposition) method to form a soot layer (3) and by
vitrifying the soot layer (3) into a transparent glass preform,
***characterized in that***
an amount of the glass particles to be deposited on the starting glass rod (1) is adjusted based on J ratio fluctuation distribution data,
the J ratio being a ratio of an outer diameter of a glass preform to an outer diameter of a starting glass rod (1),
of at least one previously produced glass preform in a longitudinal direction so that the glass preform to be produced may have a uniform J ratio in the longitudinal direction.

2. The method of producing a glass preform as defined in claim 1, ***characterized in that***
the J ratio fluctuation distribution data is prepared for each of classes of starting glass rods (1) with dummy rods (1b) welded thereto or each of types of apparatuses for producing an glass preform.

3. The method of producing a glass preform as defined in any of claims 1 to 2, ***characterized in that*** the J ratio fluctuation distribution data is updated by newly obtained data.

4. The method of producing a glass preform as defined in any of claims 1 to 2, ***characterized in that*** the glass particle deposit amount is adjusted by changing the flow rate of glass raw material gas in the longitudinal direction so that the J ratio of the glass preform matches a target J ratio.

5. The method of producing a glass preform as defined in claim 4, ***characterized in that*** the flow rates of oxygen gas and hydrogen gas are changed in accordance with the change of the flow rate of glass raw material gas.

6. The method of producing a glass preform as defined in any of claims 1 to 2, ***characterized in that*** the amount of glass particles to be deposited is adjusted by changing a relative movement speed of a glass particle synthesizing burner (6) and the starting glass rod (1) in its longitudinal direction so that the J ratio of the glass preform matches a target J ratio.

7. The method of producing a glass perform as defined in claim 1, ***characterized in that***
distribution of surface temperature fluctuations of a glass particle deposit on the starting glass rod (1) and distribution of outer diameter fluctuations of the glass particle deposit are measured, a weight distribution of a newly deposited soot layer (3) is calculated every traverse or every specified traverse and an amount of glass particles to be deposited by a subsequent traverse is adjusted to reduce the fluctuations of weight distribution of the newly deposited soot layer (3) or fluctuation of total weight distribution of already deposited soot layers (3) plus the newly deposited soot layer (3) and to finally attain a uniform J ratio (a ratio of a glass preform outer diameter to a starting glass rod outer diameter) of the glass preform in its longitudinal direction.

8. The method of producing a glass preform as defined in claim 7, ***characterized in that***
the starting glass rod (1) is a core glass or a glass consisting of a core and a cladding, which is usable for production of an optical fiber.

9. The method of producing a glass preform as defined in any of claims 7 or 8, ***characterized in that***
bulk density of the soot layer (3) is determined from the measured values of the surface temperature of the glass particle deposit and a weight of the soot layer (3) is then determined from the bulk density and an outer diameter of the soot layer (3).

10. The method of producing a glass preform as defined in any of claims 7 or 8, ***characterized in that***
a distance from a surface of the soot layer (3) is measured and the outer diameter of the soot layer (3) is determined based on the measured distance.

11. The method of producing a glass preform as defined in any of claims 7 or 8, ***characterized in that*** the amount of glass particles to be deposited is adjusted by changing the flow rate of glass raw material gas in the longitudinal direction.

12. The method of producing a glass preform as defined in claim 11, ***characterized in that***
the flow rates of hydrogen gas and oxygen gas is adjusted in accordance with the change of the flow rate of glass raw material gas.

13. The method of producing a glass preform as defined in any of claims 7 or 8, ***characterized in that***
the amount of glass particles to be deposited is adjusted by changing a traversing speed of the starting glass rod (1) in its longitudinal direction.

14. A glass preform production apparatus, comprising:
- a reaction vessel (4),
- a driving device (5) for rotating and moving a starting glass rod (1) in its longitudinal direction, and
- a burner (6) for producing glass particles to be deposited on the external cylindrical surface of the starting glass rod (1),
***characterized in that*** it is further provided with
- a soot position measuring device (11) for measuring a position in the longitudinal direction on a soot layer (3),
- a radiation thermometer for measuring a surface temperature of a glass particle deposit,
- a laser type distance measuring device for measuring an outer diameter of the soot layer (3), and
- an arithmetic unit (13) for calculating weight distribution of the soot layer (3) from the surface temperature of the glass particle deposit and the outer diameter of the glass particle deposit.

15. The glass preform production apparatus as defined in claim 14, ***characterized in that***
a control unit (14) is provided for adjusting an amount of the glass particles to be deposited based on the weight distribution of the soot layer (3) .

## Patentansprüche

1. Verfahren zur Herstellung eines Glasvorformlings durch
sukzessives Abscheiden von Glaspartikeln auf der zylindrischen Außenfläche eines Ausgangsglasstabes (1) durch ein OVD (Außenseitenaufdampf)-Verfahren zur Bildung einer Russschicht (3) und
Verglasen der Russschicht (3) in einen transparenten Glasvorformling,
**dadurch gekennzeichnet, dass**
eine Menge der auf dem Ausgangsglasstab (1) abzuscheidenden Glaspartikel auf der Basis von J-Verhältnis-Schwankungsverteilungsdaten eingestellt wird,
das J-Verhältnis das Verhältnis des Außendurchmessers eines Glasvorformlings zum Außendurchmesser des Ausgangsglasstabes (1),
wenigstens eines vorgefertigten Glasvorformlings ist, so dass der herzustellende Glasvorformling ein gleichförmiges J-Verhältnis in Längsrichtung besitzt.

2. Verfahren zur Herstellung eines Glasvorformlings nach Anspruch 1, **dadurch gekennzeichnet, dass**
die J-Verhältnis-Schwankungsverteilungsdaten für jede Klasse von Ausgangsglasstäben (1) mit daran angeschweißten Blindstäben (1b) oder für jeden Typ von Einrichtungen zur Herstellung eines Glasvorformlings gebildet werden.

3. Verfahren zur Herstellung eines Glasvorformlings nach den Ansprüchen 1 und 2, **dadurch gekennzeichnet, dass**
die J-Verhältnis-Schwankungsverteilungsdaten durch neu gewonnene Daten aktualisiert werden.

4. Verfahren zur Herstellung eines Glasvorformlings nach den Ansprüchen 1 und 2, **dadurch gekennzeichnet, dass**
die Menge der abgeschiedenen Glaspartikel durch Änderung der Strömungsgeschwindigkeit von Glas-Rohmaterialgas in Längsrichtung so eingestellt wird, **dass** das J-Verhältnis des Glasvorformlings an ein Ziel-J-Verhältnis angepasst ist.

5. Verfahren zur Herstellung eines Glasvorformlings nach Anspruch 4, **dadurch gekennzeichnet, dass**
die Strömungsgeschwindigkeiten von Sauerstoffgas und Wasserstoffgas als Funktion der Änderung der Strömungsgeschwindigkeit von Glas-Rohmaterialgas geändert werden.

6. Verfahren zur Herstellung eines Glasvorformlings nach den Ansprüchen 1 und 2, **dadurch gekennzeichnet, dass**
die Menge der abzuscheidenden Gaspartikel durch Änderung der Relativbewegungsgeschwindigkeit eines Glaspartikel-Synthesebrenners (6) und des Ausgangsglasstabes (1) in seiner Längsrichtung so eingestellt wird, **dass** das J-Verhältnis des Glasvorformlings an ein Ziel-J-Verhältnis angepasst ist.

7. Verfahren zur Herstellung eines Glasvorformlings nach Anspruch 1, **dadurch gekennzeichnet, dass**
die Verteilung von Oberflächentemperaturschwankungen einer Glaspartikelabscheidung auf dem Ausgangsglasstab (1) und die Verteilung von Außendurchmesserschwankungen der Glaspartikelabscheidung gemessen werden, die Gewichtsverteilung einer neu abgeschiedenen Russschicht (3) für jeden Durchlauf oder jeden spezifischen Durchlauf gemessen wird und die Menge von in einem nachfolgenden Durchlauf abzuscheidenden Glaspartikel eingestellt wird, um die Gewichtsverteilungsschwankungen der neu abgeschiedenen Russschicht (3) oder die Schwankung einer Gesamtgewichtsverteilung von bereits abgeschiedenen Russschichten (3) plus der neu abgeschiedenen Russschicht (3) zu reduzieren und schließlich ein gleichförmiges J-Verhältnis (das Verhältnis des Außendurchmessers des Glasvorformlings zum Außendurchmesser des Ausgangsglasstabes) des Glasvorformlings in seiner Längsrichtung zu erzielen.

8. Verfahren zur Herstellung eines Glasvorformlings nach Anspruch 7, **dadurch gekennzeichnet, dass**
der Ausgangsglasstab (1) ein Kernglas oder ein aus einem Kern und einem Überzug bestehendes Glas ist, das zur Herstellung einer optischen Faser brauchbar ist.

9. Verfahren zur Herstellung eines Glasvorformlings nach Anspruch 7 oder 8, **dadurch gekennzeichnet, dass**
die Schüttdichte der Russschicht (3) aus den gemessenen Werten der Oberflächentemperatur der Glaspartikelabscheidung und des Gewichtes der Russschicht (3) bestimmt und dann aus der Schüttdichte und dem Außendurchmesser der Russschicht (3) bestimmt wird.

10. Verfahren zur Herstellung eines Glasvorformlings nach Anspruch 7 oder 8, **dadurch gekennzeichnet, dass**
der Abstand von einer Oberfläche der Russschicht (3) gemessen und der Außendurchmesser der Russschicht (3) auf der Basis des gemessenen Abstandes bestimmt wird.

11. Verfahren zur Herstellung eines Glasvorformlings nach Anspruch 7 oder 8, **dadurch gekennzeichnet, dass**
die Menge der abzuscheidenden Glaspartikel durch Änderung der Strömungsgeschwindigkeit von Glas-Rohmaterialgas in Längsrichtung eingestellt wird.

12. Verfahren zur Herstellung eines Glasvorformlings nach Anspruch 11, **dadurch gekennzeichnet, dass**
die Strömungsgeschwindigkeiten von Wasserstoffgas und Sauerstoffgas als Funktion der Änderung der Strömungsgeschwindigkeit von Gas-Rohmaterialgas eingestellt wird.

13. Verfahren zur Herstellung eines Glasvorformlings nach Anspruch 7 oder 8, **dadurch gekennzeichnet, dass**
die Menge der abzuscheidenden Glaspartikel durch Änderung der Übergangsgeschwindigkeit des Ausgangsglasstabes (1) in seiner Längsrichtung eingestellt wird.

14. Einrichtung zur Herstellung eines Glasvorformlings umfassend:
- ein Reaktionsgefäß (4),
- eine Antriebseinrichtung (5) zur Drehung und Bewegung eines Ausgangsglasstabes (1) in seiner Längsrichtung, und
- einen Brenner (6) zur Erzeugung von auf der zylindrischen Außenfläche des Ausgangsglasstabes (1) abzuscheidenden Glaspartikeln,
**gekennzeichnet durch**
- eine Russstellungs-Messeinrichtung (11) zur Messung einer Stellung in Längsrichtung auf einer Russschicht (3),
- ein Strahlungsthermometer zur Messung der Oberflächentemperatur einer Glaspartikelabscheidung,
- eine Laser-Abstandsmesseinrichtung zur Messung des Außendurchmessers der Russschicht (3), und
- eine arithmetische Einheit (13) zur Berechnung der Gewichtsverteilung der Russschicht (3) aus der Oberflächentemperatur der Glaspartikelabscheidung und dem Außendurchmesser der Glaspartikelabscheidung.

15. Einrichtung zur Herstellung eines Glasvorformlings nach Anspruch 14, **dadurch gekennzeichnet, dass**
eine Steuereinheit (14) zur Einstellung der Menge von abzuscheidenden Glaspartikeln auf der Basis der Gewichtsverteilung der Russschicht (3) vorgesehen ist.

## Revendications

1. Procédé de fabrication d'une préforme en verre comprenant les étapes consistant à :
déposer successivement des particules de verre sur une surface cylindrique externe d'une baguette de verre d'amorçage (1) en utilisant un procédé OVD (de dépôt chimique en phase vapeur à l'extérieur (Outside Vapor Deposition, en anglais)), pour former une couche de suie (3) ; et à
vitrifier la couche de suie (3) en une préforme en verre transparent,
**caractérisé en ce que**
une quantité des particules de verre destinées à être déposées sur la baguette de verre d'amorçage (1) est ajustée sur la base de données de distribution fluctuante de rapport J,
le rapport J étant un rapport entre un diamètre extérieur d'une préforme en verre et un diamètre extérieur d'une baguette de verre d'amorçage (1),
d'au moins une préforme en verre précédemment produite dans une direction longitudinale, de telle sorte que la préforme en verre destinée à être produite puisse avoir un rapport J uniforme dans la direction longitudinale.

2. Procédé de fabrication d'une préforme en verre selon la revendication 1, **caractérisé en ce que**
les données de distribution fluctuante de rapport J sont préparées pour chacune des classes de baguettes de verre d'amorçage (1) avec des baguettes factices (1b) soudées à elles, ou chacun des types d'appareils pour la production d'une préforme en verre.

3. Procédé de fabrication d'une préforme en verre selon l'une quelconque des revendications 1 à 2, **caractérisé en ce que**
les données de distribution fluctuante de rapport J sont mises à jour avec des données nouvellement obtenues.

4. Procédé de fabrication d'une préforme en verre selon l'une quelconque des revendications 1 à 2, **caractérisé en ce que**
la quantité des particules de verre destinées à être déposées est ajustée en modifiant la vitesse d'écoulement d'un gaz de matière première de verre dans la direction longitudinale, de telle sorte que le rapport J de la préforme en verre coïncide avec un rapport J cible.

5. Procédé de fabrication d'une préforme en verre selon la revendication 4, **caractérisé en ce que**
les vitesses d'écoulement d'un gaz d'oxygène et d'un gaz d'hydrogène sont ajustées en fonction de la modification de la vitesse d'écoulement d'un gaz de matière première de verre.

6. Procédé de fabrication d'une préforme en verre selon l'une quelconque des revendications 1 à 2, **caractérisé en ce que**
la quantité des particules de verre destinées à être déposées est ajustée en modifiant une vitesse de mouvement relative d'un brûleur de synthétisation de particules de verre (6) et la baguette de verre d'amorçage (1) dans sa direction longitudinale, de telle sorte que le rapport J de la préforme en verre coïncide avec un rapport J cible.

7. Procédé de fabrication d'une exécuter en verre selon la revendication 1, **caractérisé en ce que**
une distribution de variations de température de surface d'une couche de dépôt de particules de verre sur la baguette de verre d'amorçage (1) et une distribution de variations de diamètre extérieur de la couche de dépôt de particules de verre sont mesurées, une distribution de poids d'une couche de suie nouvellement déposée (3) est calculée à chaque mouvement ou à chaque mouvement spécifié, et une quantité des particules de verre destinées à être déposées par un mouvement consécutif est ajustée afin de réduire l'écart dans la distribution de poids de la couche de suie nouvellement déposée (3) ou un écart dans la distribution de poids total de couches de suie déjà déposées (3) en plus de la couche de suie nouvellement déposée (3), et pour atteindre finalement un rapport J uniforme (un rapport entre un diamètre extérieur d'une préforme en verre et un diamètre extérieur d'une baguette de verre d'amorçage) de la préforme en verre dans sa direction longitudinale.

8. Procédé de fabrication d'une préforme en verre selon la revendication 7, **caractérisé en ce que**
la baguette de verre d'amorçage (1) est un verre de coeur ou un verre composé d'un coeur et d'un revêtement, qui est utilisable pour la production d'une fibre optique.

9. Procédé de fabrication d'une préforme en verre selon l'une quelconque des revendications 7 ou 8, ou **caractérisé en ce que**
la densité apparente de la couche de suie (3) est déterminée à partir des valeurs mesurées de la température de surface de la couche de dépôt de particules de verre, et un poids de la couche de suie (3) est déterminé ensuite à partir de la densité apparente et d'un diamètre extérieur de la couche de suie (3).

10. Procédé de fabrication d'une préforme en verre selon l'une quelconque des revendications 7 ou 8, ou **caractérisé en ce que**
une distance par rapport à une surface de la couche de suie (3) est mesurée, et le diamètre extérieur de la couche de suie (3) est déterminé sur la base de la distance mesurée.

11. Procédé de fabrication d'une préforme en verre selon l'une quelconque des revendications 7 ou 8, ou **caractérisé en ce que**
la quantité des particules de verre destinées à être déposées est ajustée en modifiant la vitesse d'écoulement du gaz de matière première de verre dans la direction longitudinale.

12. Procédé de fabrication d'une préforme en verre selon la revendication 11, **caractérisé en ce que**
les vitesses d'écoulement d'un gaz d'oxygène et d'un gaz d'hydrogène sont ajustées en fonction de la modification de la vitesse d'écoulement du gaz de matière première de verre.

13. Procédé de fabrication d'une préforme en verre selon l'une quelconque des revendications 7 ou 8, ou **caractérisé en ce que**
la quantité des particules de verre destinées à être déposées est ajustée en modifiant la vitesse de mouvement de la baguette de verre d'amorçage (1) dans sa direction longitudinale.

14. Appareil de fabrication d'une préforme en verre, comprenant :
- une cuve de réaction (4),
- un dispositif d'entraînement (5) pour faire tourner et déplacer une baguette de verre d'amorçage (1) dans sa direction longitudinale, et
- un brûleur (6) pour produire des particules de verre destinées à être déposées sur la surface cylindrique externe de la baguette de verre d'amorçage (1),
**caractérisé en ce qu'**il comprend en outre :
- un dispositif de mesure de position de suie (11) pour mesurer une position dans la direction longitudinale sur une couche de suie (3),
- un thermomètre à radiation pour mesurer une température de surface d'une couche de dépôt de particules de verre,
- un dispositif de mesure de distance du type à laser pour mesurer un diamètre extérieur de la couche de suie (3), et
- une unité arithmétique (13) pour calculer une distribution de poids de la couche de suie (3) à partir de la température de surface de la couche de dépôt de particules de verre et du diamètre extérieur de la couche de dépôt de particules de verre.

15. Appareil de fabrication d'une préforme en verre selon la revendication 14, **caractérisé en ce que** :
une unité de contrôle (14) est prévue pour ajuster une quantité des particules de verre destinées à être déposées, sur la base de la distribution de poids de la couche de suie (3).
